(19) Europäisches Patentamt
European Patent Office
Office européen des brevets

(11) **EP 3 439 199 B1**

(12) **FASCICULE DE BREVET EUROPEEN**

(45) Date de publication et mention de la délivrance du brevet:
**09.03.2022 Bulletin 2022/10**

(21) Numéro de dépôt: **18181863.4**

(22) Date de dépôt: **05.07.2018**

(51) Classification Internationale des Brevets (IPC):
**H04B 7/185** *(2006.01)*     **H04B 7/204** *(2006.01)*

(52) Classification Coopérative des Brevets (CPC):
**H04B 7/2041; H04B 7/18513; H04B 7/18515**

(54) **ARCHITECTURE DE CHARGE UTILE FLEXIBLE POUR APPLICATIONS VHTS ET HTS**

ARCHITEKTUR EINER FLEXIBLEN LADEKAPAZITÄT FÜR VHTS- UND HTS-ANWENDUNGEN

FLEXIBLE PAYLOAD ARCHITECTURE FOR VHTS AND HTS APPLICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2017 FR 1700823**

(43) Date de publication de la demande:
**06.02.2019 Bulletin 2019/06**

(73) Titulaire: **THALES**
**92400 Courbevoie (FR)**

(72) Inventeurs:
• **VOISIN, Philippe**
**31100 TOULOUSE (FR)**
• **MAILLET, Olivier**
**31100 TOULOUSE (FR)**
• **DESROUSSEAUX, Eric**
**31100 TOULOUSE (FR)**
• **SCHREIDER, Ludovic**
**31100 TOULOUSE (FR)**

(74) Mandataire: **Marks & Clerk France**
**Immeuble "Visium"**
**22, avenue Aristide Briand**
**94117 Arcueil Cedex (FR)**

(56) Documents cités:
**EP-A2- 2 930 862          US-A- 6 160 994**
**US-A1- 2017 181 160**

**Description**

La présente invention concerne une architecture flexible de charge utile de télécommunications, et plus particulièrement de charge utile de télécommunications multifaisceaux ou multi-spots de très forte capacité, embarquée à bord d'un satellite de télécommunications, pour des applications VHTS (en anglais Very High Throughput Satellite) ou des applications HTS (en anglais High Throughput Satellite).

Pour des applications HTS à capacité élevée et plus particulièrement des applications VHTS à capacité très élevée, les opérateurs de télécommunications souhaitent disposer de charges utiles de télécommunications spatiales suffisamment flexibles pour répondre à leurs besoins en termes de :

  .- capacité ou aptitude (en anglais « capability ») d'allocation de bande passante aux spots utilisateurs répondant aux besoins de trafic, et
  .- capacité ou aptitude à varier dynamiquement la capacité de transmission, en termes de quantité ou volume de ressources de transmission, allouée à chaque spot utilisateur selon les variations de demande de trafic ; et
  .- capacité ou aptitude à rationaliser, c'est-à-dire minimiser, le nombre de stations d'accès satellitaire, dénommées en anglais « gateways » et désignées par la suite par stations d'accès, pour répondre à la capacité de transmission instantanée demandée sur l'ensemble des spots utilisateurs,
  .- capacité ou aptitude de déploiement progressif de la capacité avec un minimum de stations d'accès satellitaire en début de vie tout en étant en mesure de servir les spots utilisateurs nécessitant des ressources ; et
  .- capacité ou aptitude à offrir toute la bande disponible à chaque spot utilisateur afin d'éviter des problèmes de coordination de fréquences ; et
  .- capacité ou aptitude à offrir des liaisons de type maillé (en anglais « mesh ») permettant de connecter directement certains spots utilisateur entre eux au niveau bord (i.e. la charge utile), c'est-à-dire sans passer par le sol,
  .- capacité ou aptitude à connecter plusieurs stations d'accès à un même spot utilisateur.

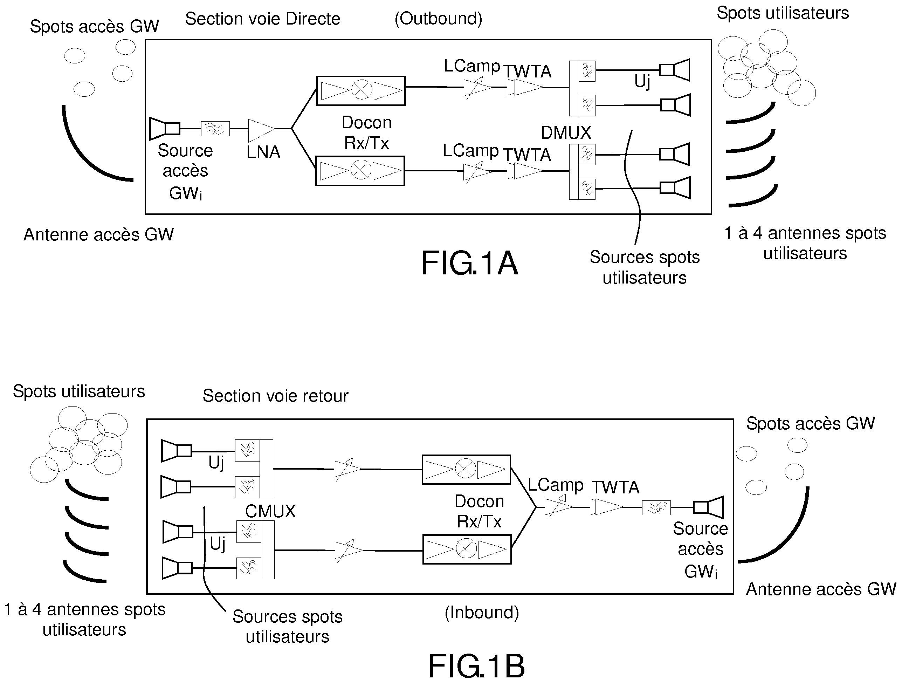

La plupart des architectures de charge utile existantes, actuellement proposées ou développées pour allouer de la capacité de transmission aux spots, sont fondées sur une division fréquentielle des ressources de transmission, et consistent typiquement à déterminer au préalable et prévoir le trafic qui pourrait être nécessaire sur chaque spot utilisateur en fonction de critères dépendant d'analyses économiques, du type entre autres densité de population de la zone couverte par le spot utilisateur et/ou de taux de pénétration des systèmes sol ou terrestres cellulaires de télécommunications, et à optimiser au mieux l'architecture de la charge utile pour répondre à ce besoin de trafic défini au préalable. Le résultat obtenu en utilisant une telle approche consiste typiquement en une architecture statique de charge utile, comme par exemple celle décrite dans les Figures 1A et 1B, qui met en jeu plusieurs paramètres pour adapter la charge de chaque spot utilisateur par rapport au besoin final de trafic prévu, ces paramètres étant définis en termes :

  .- de gestion de spots utilisateurs de diamètre différent, par exemple des spots fins sur les zones très capacitives et des spots plus larges sur les zones moins capacitives ;
  .- d'allocation de plus ou moins de bande émission satellite Tx par spot utilisateur (voie directe du transpondeur sur la Figure 1A en partance des stations d'accès connectées à l'infrastructure de réseau sol, i.e. en anglais « forward section » ou « Outbound ») et de plus ou moins de bande réception Rx par spot utilisateur (voie retour du transpondeur sur la Figure 1B en arrivée aux stations d'accès connectées à l'infrastructure de réseau sol, i.e. en anglais « return section » ou « Inbound ») ; suivant la Figure 1A, la bande émission amplifiée par chaque amplificateur de puissance élevée HPA (en anglais « High Power Amplifier ») coté Tx de la charge utile est divisée en sous-bandes via un démultiplexeur (DMUX) fréquentiel, par exemple ici un duplexeur fréquentiel. Suivant la Figure 1B et de manière symétrique, la bande réception amplifiée par chaque amplificateur à faible bruit LNA (en anglais « Low Noise Amplifier ») coté Rx de la charge utile est la combinaison additionnelle de sous-bandes via un multiplexeur fréquentiel combineur (CMUX), ici à deux entrées ;
  .- de nombre de stations d'accès GWs, défini par la somme de chaque maximum de capacité de transmission pouvant être nécessaire à un spot utilisateur (et non pas par la capacité maximale de transmission requise par le système satellite), ce qui conduit à un nombre de stations d'accès supérieur au besoin réellement utile. US6160994 décrit un satellite avec une charge utile comprenant plusieurs processeurs connectés à une matrice de commutation.

Il est possible d'introduire de la flexibilité dans les architectures statiques décrites ci-dessus en utilisant des commutateurs (en anglais « switches ») électromécaniques et en ajoutant des démultiplexeurs DMUX et/ou multiplexeurs CMUX supplémentaires. Ces dispositifs additionnels permettent d'avoir un peu de flexibilité pour sélectionner les stations d'accès qui vont servir certains spots utilisateurs et pour sélectionner la largeur de bande allouée à un spot utilisateur, mais la flexibilité reste limitée.

Par ailleurs, si les architectures de charge utile obtenues par l'ajout de ces dispositifs peuvent offrir une réponse à certains besoins nécessitant une flexibilité limitée, ces architectures restent incompatibles des besoins définis en termes :

.- de capacité pour chaque spot utilisateur à accéder à la bande de fréquence totale du service VHTS ou HTS, chaque spot utilisateur accédant seulement à une fraction de la bande totale allouée du fait de l'utilisation de démultiplexeurs DMUX en émission satellite Tx et de multiplexeurs CMUX en réception satellite Rx, et d'existence d'une solution simple à pertes limitées qui permettrait d'allouer plus ou moins de bande par spot utilisateur voire une autre bande ;

.- d'un surdimensionnement non acceptable de l'ensemble de l'architecture charge utile si la bande totale du service utilisateur VHTS ou HTS est allouée à chaque spot utilisateur ;

.- de déploiement progressif des services avec un minimum de stations d'accès sauf au prix d'une complexité non négligeable de l'architecture et un impact sur la masse de la charge utile important ;

.- de liaisons de type « mesh », la création de $N^2$ chemins étant nécessaire pour un nombre N donné de spots utilisateurs générés, ce qui est totalement irréaliste au regard des impacts globaux sur la charge utile.

Le problème technique est de fournir une architecture de charge utile VHTS ou HTS, de plus faible masse et de complexité moindre en termes de nombre de commutateurs RF utilisés, qui satisfait les exigences de service d'une charge utile VHTS ou HTS se déclinant en :

.- la capacité d'allocation de bande passante aux spots répondant aux besoins de trafic ; et

.- la capacité de variation dynamique de la capacité allouée à chaque spot selon les variations de demande de trafic ;

.- la capacité de rationaliser le nombre de stations d'accès satellitaire, dénommées en anglais « gateways » et désignées par la suite par stations d'accès, pour répondre à la capacité instantanée demandée sur l'ensemble des spots ;

.- la capacité de déploiement progressif de la capacité avec un minimum de stations d'accès satellitaire en début de vie tout en étant en mesure de servir les spots nécessitant des ressources ; et

.- la capacité à offrir toute la bande disponible à chaque spot afin d'éviter des problèmes de coordination de fréquence ; et

.- la capacité à offrir des liaisons de type « mesh » permettant de connecter directement certains spots entre eux au niveau bord, c'est-à-dire sans passer par le sol ; et

.- la capacité à connecter plusieurs stations d'accès à un même spot.

A cet effet, l'invention a pour objet une charge utile de télécommunications multifaisceaux pour des applications de télécommunications spatiales à débit très élevé VHTS ou de télécommunications spatiales à débit élevé HTS comprenant :

.- un premier système antennaire multifaisceaux d'antennes passives avec une composante réception Rx et une composante émission Tx, configurées respectivement pour recevoir depuis des spots de station d'accès GW de réception Rx satellite et émettre vers des spots de station d'accès d'émission GW Tx satellite, respectivement dans une première bande de réception Rx satellite et une première bande d'émission Tx satellite ; et

.- un deuxième système antennaire multifaisceaux d'antennes passives avec une composante réception Rx et une composante émission Tx, configurées respectivement pour recevoir depuis et émettre vers une zone de couverture utilisateur respectivement dans une deuxième bande de réception Rx satellite et une deuxième bande d'émission Tx satellite, en générant de multiples spots utilisateurs de réception satellite et de multiples spots utilisateurs d'émission satellite.

La charge utile comporte : un coeur numérique, basé sur un processeur de traitement numérique transparent DTP,

comprenant un nombre d'accès en entrée et en sortie lui permettant d'être connecté à tous les spots des stations d'accès et tous les spots utilisateurs et configuré pour interconnecter les spots utilisateurs et les spots des stations d'accès en fonction d'un plan de fréquence

et un ensemble de commutation RF, formé par une ou plusieurs matrices de commutateurs RF d'accès source de spots utilisateurs en émission satellite Tx seulement, regroupés en groupement(s) Gj de spots utilisateurs en émission satellite Tx, ou formé par une ou plusieurs matrices de commutateurs RF d'accès source de spots utilisateurs émission satellite Tx, regroupés en groupement(s) Gj de spots utilisateurs en émission satellite Tx, et par une ou plusieurs matrices de commutateurs RF d'accès source de spots utilisateurs réception satellite Rx, regroupés en groupement(s) G'j de spots utilisateurs en réception satellite Rx, le nombre de spots Rj de chaque groupement Gj de spots utilisateurs en émission satellite Tx et le nombre R'j de chaque groupement G'j de spots utilisateurs en réception satellite Tx étant inférieurs ou égaux au nombre total P, supérieur ou égal à 2, de stations d'accès GW.

Suivant des modes particuliers de réalisation, la charge utile VHTS comprend l'une ou plusieurs des caractéristiques suivantes pris isolément ou en combinaison :

.- lorsque la charge utile est de type VHTS, la première bande de réception Rx comprend une partie de la bande V, comprise entre 47,7 GHz et 51,4 GHz, formée par une première sous-bande et/ou une deuxième sous-bande mutuellement séparées ou adjacentes, et/ou une partie de la bande Ka, comprise entre 27,5 GHz et 30 GHz, formant une troisième sous-bande, et la première bande d'émission Tx comprend une quatrième sous-bande, partie de la bande Q, comprise entre 37,5 GHz et 42,5 GHz, et la deuxième bande de réception Rx comprend une cinquième sous-bande, partie de la bande Ka comprise entre 27,5 GHz et 30 GHz, et séparée de ou adjacente à la troisième sous-bande, et la deuxième bande d'émission Tx comprend une sixième sous-bande, partie de la bande Ka, comprise entre 17,3 GHz et 20,2 GHz ; ou lorsque la charge utile est de type HTS, la première bande de réception Rx comprend une première sous-bande, partie de la bande Ka, comprise entre 27,5 GHz et 29,5 GHz, et la première bande d'émission Tx comprend une deuxième sous-bande, partie de la bande Ka, comprise entre 17,3 GHz et 17,7 GHz, et la deuxième bande de réception Rx comprend une troisième sous-bande, partie de la bande Ka, comprise entre 29,5 GHz et 30 GHz, et la deuxième bande d'émission Tx comprend une quatrième sous-bande, partie de la bande Ka, comprise entre 17,7 GHz et 20,2 GHz ;

.- le premier système antennaire multifaisceaux comprend un nombre d'accès aux spots réception des stations d'accès GW, égal au nombre total P des stations d'accès GW, et est configuré pour que chaque spot réception de station d'accès GW créé desserve une unique station d'accès GW, et la charge utile de télécommunications multifaisceaux comprenant en outre P premiers amplificateurs à faible bruit LNA, chaque LNA étant connecté entre l'unique accès d'un spot réception satellite Rx d'une station d'accès différente et une entrée différente du processeur numérique transparent DTP ;

.- le premier système antennaire multifaisceaux comprend un nombre d'accès aux spots émission des stations d'accès GW égal au nombre total P des stations d'accès GW et est configuré pour que chaque spot émission de station d'accès desserve une unique station d'accès GW, et la charge utile comprend un nombre P de deuxième amplificateurs de puissance HPA connectés entre les P accès émission des stations d'accès GWs et des sorties du processeur numérique transparent DTP ;

.- le deuxième système antennaire multifaisceaux comprend un nombre entier N d'accès source aux spots utilisateurs d'émission satellite, et la charge utile comprend : un nombre K1 de troisièmes amplificateurs RF de puissance HPA connecté(s) directement à K1 accès source aux spots utilisateurs d'émission satellite pris parmi les N accès de spot utilisateur d'émission, K1 étant un nombre entier inférieur ou égal à N-1, et un nombre K2 de troisièmes amplificateurs RF de puissance HPA connecté(s) aux N-K1 accès sources restants de spot utilisateur d'émission au travers de K2 matrices de commutations Mj, permettant chacune la mise en oeuvre d'un saut de faisceaux sur un groupement Gj différent de spots utilisateurs Tx dont le nombre de spots Rj est inférieur ou égal au nombre total P de stations d'accès GW, les nombres entiers N, K1, K2 et Rj, j variant de 1 à K2 vérifiant la relation :

$$N = K1 + \sum_{j=1}^{K2} R_j \; ;$$

.- le deuxième système antennaire multifaisceaux comprend un nombre entier d'accès source aux spots utilisateurs de réception émission satellite égal au nombre N, et la charge utile comprend : un nombre K'1 de quatrième amplificateurs RF à faible bruit LNA connectés directement à K'1 accès source aux spots utilisateurs de réception satellite pris parmi les N accès de spot utilisateur de réception, et un nombre K'2 de quatrième amplificateurs RF à faible bruit LNA connectés aux N-K'1 accès sources restants de spot utilisateur de réception au travers de K'2 matrices de commutations Nj, permettant chacune la mise en oeuvre d'un saut de faisceaux sur un groupement G'j différent de spots utilisateurs de réception Rx dont le nombre de spots R'j est inférieur ou égal au nombre total P de stations d'accès GW, les nombres entiers N, K'1, K'2 et R'j, j variant de 1 à K'2 vérifiant la relation :

$$N = K'1 + \sum_{j=1}^{K'2} R'_j \; ;$$

.- la charge utile de télécommunications multifaisceaux comprend en outre des chaines de conversion, connectées autour du processeur numérique transparent DTP, et configurées pour interfacer les composants RF de la charge utile fonctionnant dans les première et deuxième bandes d'émission Tx et de réception Rx et des entrées et sorties du processeur numérique transparent fonctionnant à une fréquence intermédiaire utile compatible des largeurs de bande utile gérées par accès en réception et en émission du processeur ;

.- le processeur numérique transparent DTP est configuré pour créer des chemins de fréquence caractérisés par une connectivité entre les spots d'accès GW et les spots utilisateurs en voie directe et entre les spots utilisateurs et les spots d'accès en voie retour, et un plan de fréquences prenant en compte un besoin de trafic et des contraintes de coordination des fréquences ;

.- chaque matrice Mj de commutateurs RF sur des accès sources de spots utilisateurs en émission satellite Tx seulement ou en émission satellite Tx et en réception satellite Rx, partie de l'ensemble de commutation RF, est configurée pour distribuer temporellement, en émission satellite Tx le signal amplifié par l'amplificateur de puissance directement connecté en amont de la matrice Mj sur les spots utilisateurs suivant un plan d'allocation temporel émission Tx de tranches temporelles d'émission prédéterminé, et en réception satellite Rx les signaux des spots utilisateurs connectés à une même matrice Nj sur l'amplificateur faible bruit directement connecté en aval de ladite matrice Nj suivant un plan d'allocation temporel réception Rx de tranches temporelles de réception prédéterminé ;

.- la charge utile de télécommunications multifaisceaux comprend en outre un calculateur ou plusieurs calculateurs pour configurer de manière statique ou dynamique le processeur de traitement numérique DTP en termes d'une matrice de connectivité depuis les spots d'accès GW vers les spots utilisateurs en voie directe et depuis les spots utilisateurs vers les spots d'accès en voie retour et en termes d'un plan de fréquences, et la ou les matrices de commutateurs pour la mise en oeuvre de sauts de faisceaux en termes d'un plan d'allocation temporel émission Tx, ou en termes d'un plan d'allocation temporel émission Tx et d'un plan d'allocation temporel réception Rx, la matrice de connectivité, le plan de fréquence et le(s) plan(s) d'allocation temporel dépendant de la distribution spatiale et temporelle de la demande de trafic dans l'ensemble des spots utilisateurs et de contraintes de coordination des fréquences ;

.- la charge utile de télécommunications multifaisceaux comprend en outre une mémoire de configurations du processeur de traitement numérique DTP et de la ou des matrices de commutateurs BH, dans lesquelles des configurations différentes en termes de triplets formés chacun par une matrice de connectivité, un plan de fréquence, un plan d'allocation temporel émission Tx ou de quadruplets formés chacun par une matrice de connectivité, un plan de fréquence, un plan d'allocation temporel émission Tx et un plan d'allocation temporel réception Tx, les configurations étant activables à des instants différents formant une séquence d'activation des configurations ;

.- le processeur de traitement numérique transparent DTP est configuré pour fournir une flexibilité totale en terme d'allocation de bande passante aux spots utilisateurs en fonction des besoins de trafic sans sur dimensionner le nombre de stations d'accès GW ;

.- chaque matrice Mj de commutateurs BH émission, connecté à un unique amplificateur de puissance HPA et associée à un groupe Gj de spots utilisateurs émission, est configurée pour connecter à tour de rôle un spot utilisateur émission du groupe Gj à l'amplificateur de puissance HPA et lui permettre de recevoir toute la bande amplifiée par ledit HPA, et le processeur de traitement numérique transparent DTP est configuré pour charger chaque amplificateur HPA, connecté à une matrice Mj de commutateurs BH émission, avec les bandes de fréquence effectivement disponibles du fait de contraintes possibles de coordination pour l'ensemble Gj des spots utilisateurs émission connectés au même HPA ;

.- le processeur de traitement numérique transparent DTP est configuré pour charger chaque amplificateur HPA, connecté à une matrice Mj de commutateurs BH émission, avec la quantité de bande de fréquence requise pour répondre aux variations temporelles de trafic demandées aux spots utilisateurs émission du groupe Gj connectés à l'amplificateur de puissance HPA correspondant, et les matrices Mj de commutateurs BH émission sont configurés en saut de faisceaux avec une modulation possible du partage temporel du temps entre les spots d'un même groupe Gj connectés à un même HPA de sorte à venir compléter l'aptitude du DTP à allouer plus ou moins de bande et répondre aux variations de trafic plus rapides auxquelles le DTP ne peut pas répondre ;

.- le processeur de traitement numérique transparent DTP et les matrices de commutateurs à saut de faisceaux sont configurés pour connecter plusieurs spots d'accès de stations d'accès Rx à un même spot utilisateur Tx tout en assurant une gestion indépendante des gains de canaux issus de chaque station d'accès GW connectées audit même spot utilisateur émission.

L'invention sera mieux comprise à la lecture de la description de plusieurs formes de réalisation qui va suivre, donnée uniquement à titre d'exemple et faite en se référant aux dessins sur lesquels :

.- les Figures 1A et 1B sont des vues respectives d'une architecture classique connue d'une section voie directe et d'une section voie retour d'une charge utile de télécommunications multifaisceaux de type HTS ;

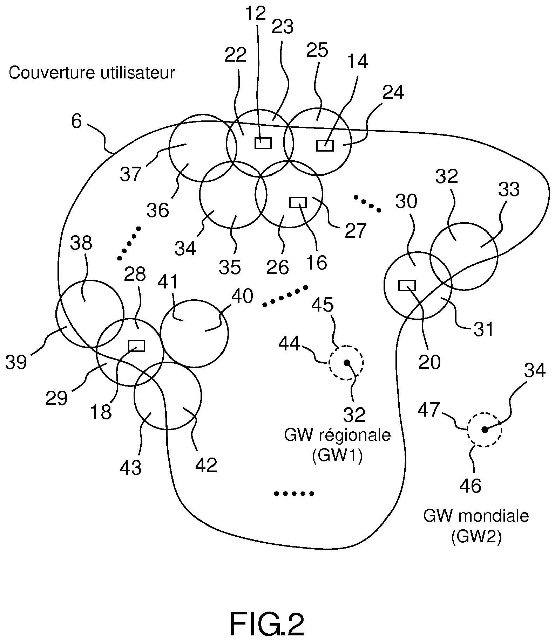

.- la Figure 2 est une vue d'un exemple typique de couverture de service et d'accès mise en oeuvre par un satellite et une charge utile de télécommunications multifaisceaux selon l'invention pour des applications VHTS ou HTS ;

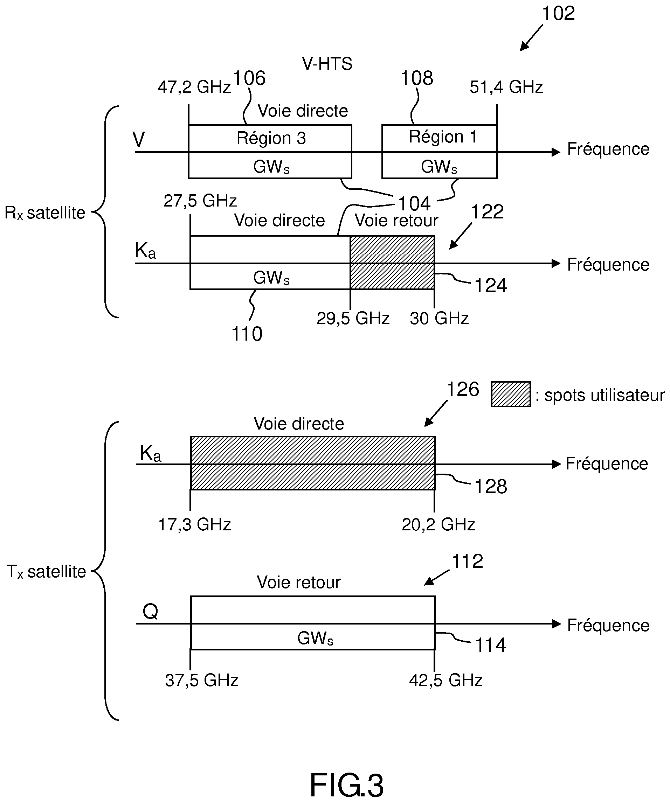

.- la Figure 3 est une vue d'un exemple de plan de fréquences d'une charge utile de télécommunications multifaisceaux selon l'invention de type VHTS ;

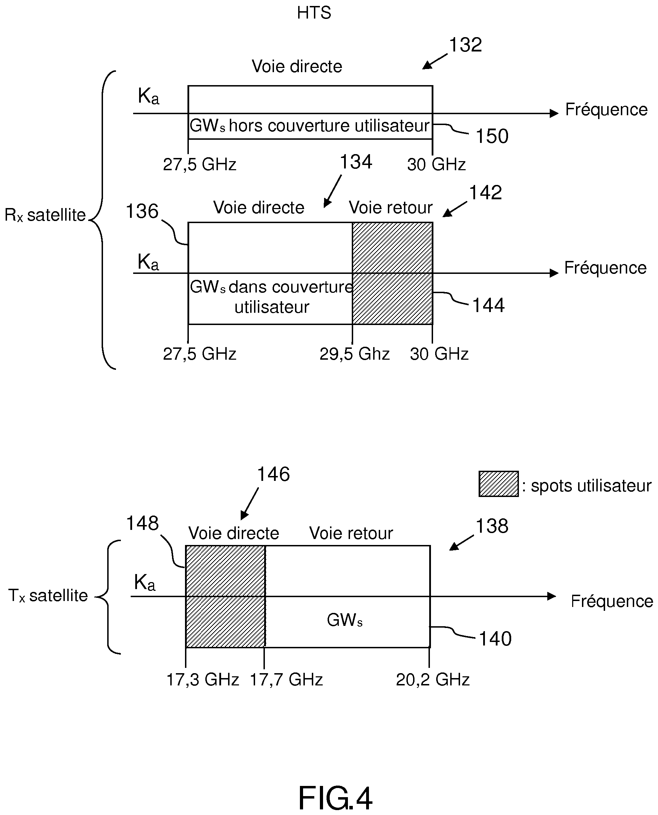

.- la Figure 4 est une vue d'un exemple de plan de fréquences d'une charge utile de télécommunications multifaisceaux selon l'invention de type HTS ;

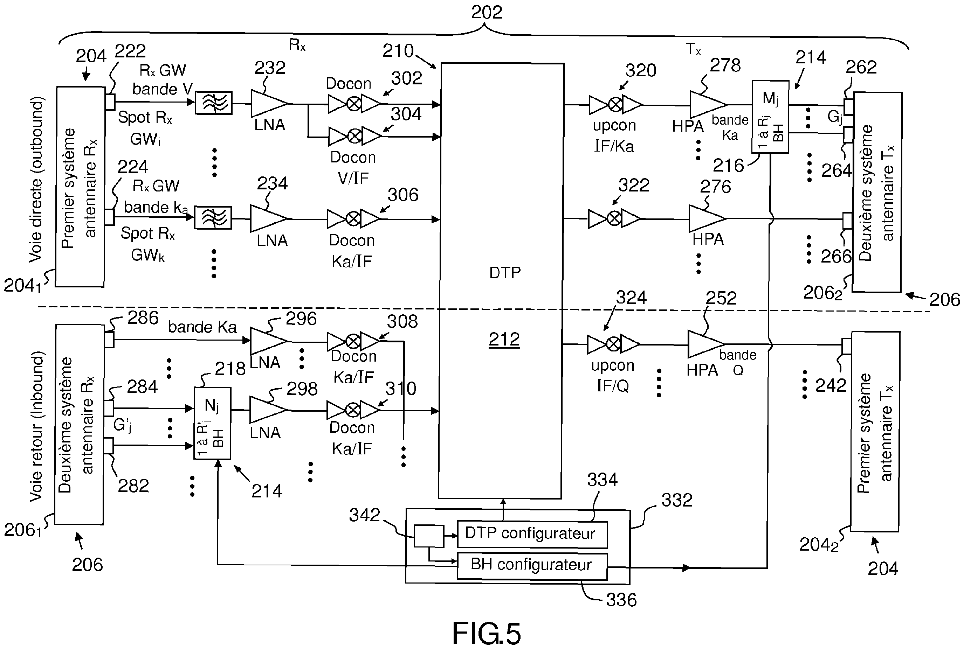

.- la Figure 5 est une vue d'un premier mode de réalisation d'une architecture de charge utile de télécommunications multifaisceaux qui correspond à des applications VHTS ;

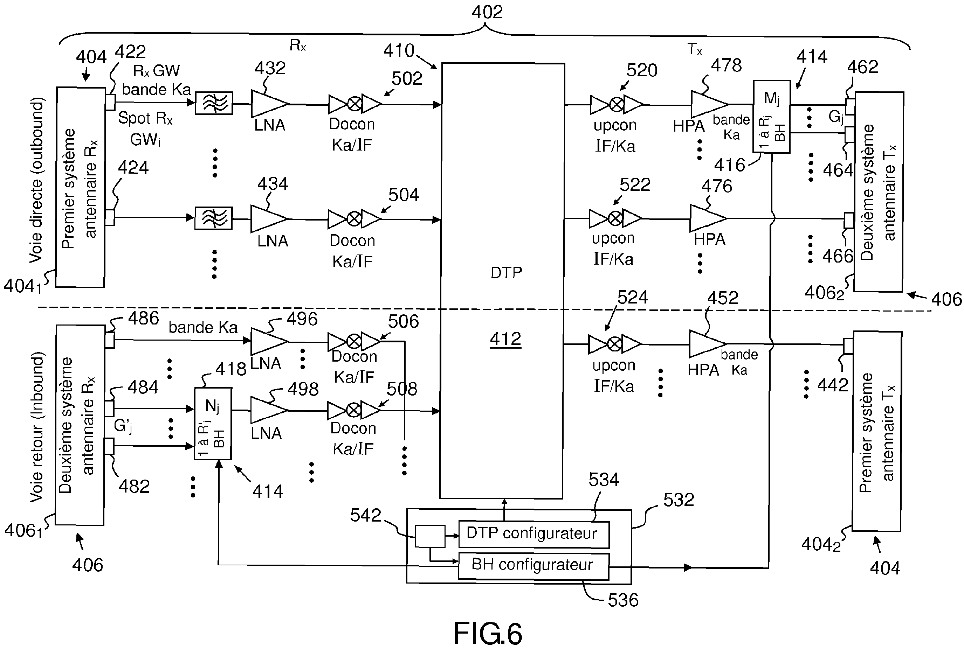

.- la Figure 6 est une vue d'un deuxième mode de réalisation d'une architecture de charge utile de télécommunications multifaisceaux qui correspond à des applications HTS ;

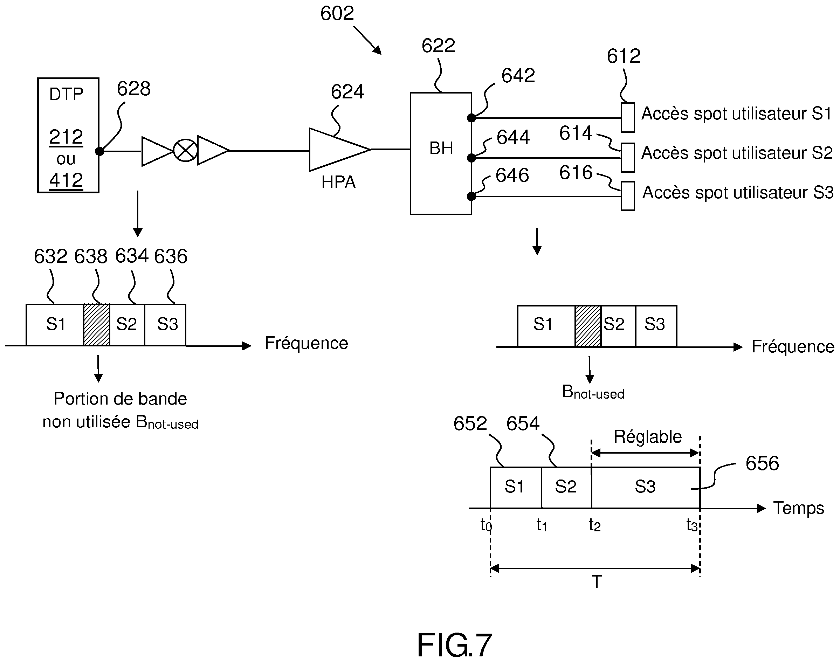

.- la Figure 7 est une vue d'un premier exemple particulier de configuration permise par la charge utile multifaisceaux selon l'invention des Figures 4 et 5 dans lequel trois spots utilisateurs émission S1, S2, S3, formant un groupe ou agrégat en mode de saut de faisceaux, sont alimentés au travers d'une matrice de commutation BH à trois sorties par un amplificateur de puissance HPA commun, lui-même alimenté par une sortie du processeur de traitement numérique transparent DTP (en anglais « Digital Transparent Processor »), la sortie étant desservie au moins partiellement par une entrée du DTP raccordée à l'accès correspondant d'une station d'accès GW, cette desserte des trois spots utilisateurs émission S1, S2, S3 étant mise en oeuvre avantageusement au travers de la flexibilité offerte par l'association du DTP et de la matrice de commutation BH pour satisfaire ici une restriction règlementaire d'utilisation des fréquences et la variation dynamique et géographique de la demande de trafic des spots utilisateurs émission S1, S2 et S3;

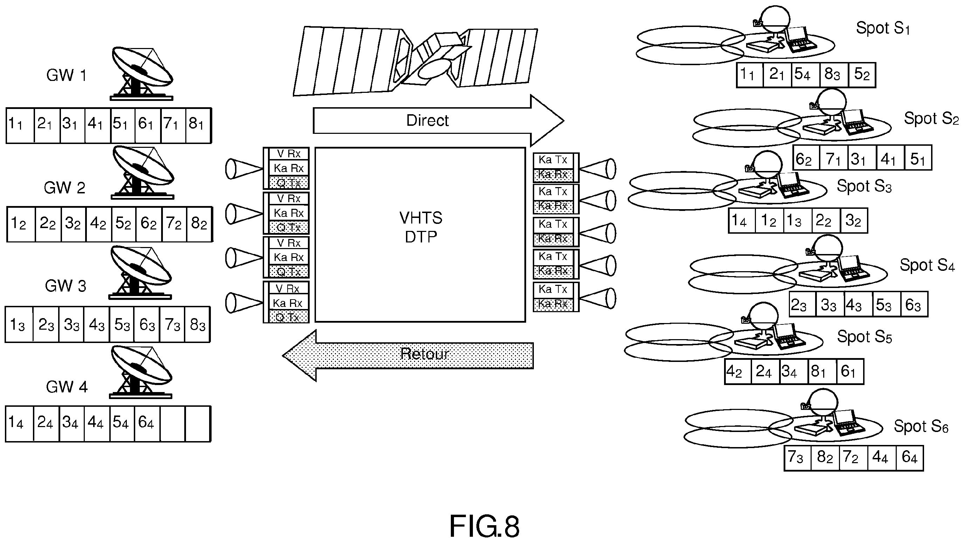

.- la Figure 8 est une vue d'un deuxième exemple particulier de configuration permise par la charge utile multifaisceaux selon l'invention des Figures 4 et 5 qui met en évidence la flexibilité apportée par le processeur de traitement numérique en termes de connectivité entre les spots d'accès GW et les spots utilisateurs et en termes de plan de fréquences.

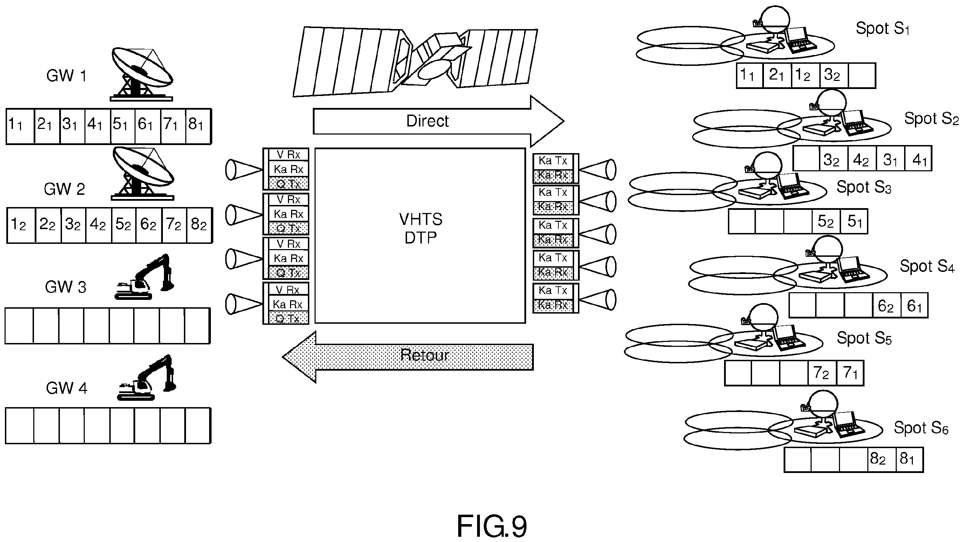

.- la Figure 9 est une vue d'un troisième exemple particulier de configuration permise par la charge utile multifaisceaux selon l'invention des Figures 4 et 5 qui met en évidence la flexibilité apportée par le processeur de traitement numérique pour déployer progressivement le nombre de stations d'accès au fur et à mesure que la demande de trafic augmente sur l'ensemble de la couverture de service.

Le concept de base de l'invention repose sur une architecture de charge utile flexible, compatible des besoins VHTS et HTS, et associant les éléments majeurs suivants :

.- un sous-système d'antennes passives multispots ;
.- un coeur répéteur basé sur un processeur numérique transparent DTP de très grande capacité dimensionné pour répondre aux besoins HTS et VHTS ;
.- un fonctionnement en saut de faisceaux de la charge utile.

Une flexibilité de cette combinaison d'éléments majeurs, compatible des besoins HTS et VHTS, est rendue possible par :

.- la fourniture d'un processeur numérique transparent (DTP) ayant la capacité à traiter la totalité du trafic d'une charge utile VHTS typiquement au delà de 100 GHz alors que les technologies existantes à ce jour limitaient la capacité de traitement en dessous de ladite valeur de 100 GHz ; et

.- l'association de ce processeur numérique à une utilisation du saut de faisceau pour générer les spots de type « terminal utilisateur » et offrir ainsi une capacité à chaque spot d'accéder à toute la bande allouée.

Ces éléments majeurs, pris en combinaison, forment une charge utile de télécommunications selon l'invention différente des charges utiles classiques telles que décrites pour des applications VHTS et HTS, notamment celle décrite dans les Figures 1A et 1B.

Suivant la Figure 2, une charge utile de télécommunications multifaisceaux selon l'invention, non représentée sur la Figure 2, de type VHTS ou HTS et en orbite géostationnaire sur une plateforme de satellite, est configurée et dimensionnée pour desservir dans une couverture de service 6 des terminaux utilisateurs 12, 14, 16, 18, 20 en émission et en réception respectivement depuis et vers la charge utile. La charge utile selon l'invention est supposée ici située au dessus et distante de la Figure 2, et regarder vers la couverture de service 6. La couverture de service 6 est formée et pavée par un ensemble de spots utilisateurs émission et réception, désignés par les références 22, 24, 26, 28, 30, 32, 34, 36, 38, 40, 42 pour les spots émission et les références 23, 25, 27, 29, 31, 33, 35, 37, 39, 41, 43 pour les spots réception. Ici, seuls onze spots utilisateurs étant représentés sur la Figure 2 par souci de lisibilité. Il est supposé ici pour simplifier la représentation de la Figure 2 que les spots utilisateurs émission et réception sont congruents, c'est-à-dire qu'à chaque spot émission satellite 22, 24, 26, 28, 30, 32, 34, 36, 38, 40, 42 correspond un spot réception satellite 23, 25, 27, 29, 31, 33, 35, 37, 39, 41, 43 de même diagramme de rayonnement. Des spots utilisateurs d'émission peuvent se recouvrir partiellement entre eux et des spots utilisateurs de réception peuvent se recouvrir partiellement entre eux. Les terminaux utilisateurs 12, 14, 16, 18, 20 sont respectivement situés dans les spots utilisateurs 22, 24, 26, 28 et 30.

La charge utile de télécommunications multifaisceaux est configurée pour desservir en voie directe les terminaux utilisateurs 12, 14, 16, 18 et 20 à partir de stations d'accès 32, 34 GW (en anglais « GateWays ») et pour desservir en voie retour les stations d'accès 32, 34 à partir des terminaux utilisateurs 12, 14, 16, 18 et 20.

Les stations d'accès 32, 34 sont desservies en voie retour par les terminaux utilisateurs au travers de spots d'accès émission 44, 46 dans lesquels les stations d'accès sont situées. Les stations d'accès 32, 34 desservent en voie directe les terminaux utilisateurs 12, 14, 16, 18 et 20 au travers de spots d'accès de réception 45, 47.

Il est supposé ici pour simplifier la représentation de la Figure 2 que les spots d'accès GW émission 44, 46 et réception 45, 47 sont congruents. Les spots d'accès GW 44, 44, 46, 47 sont définis par des pinceaux fins et représentés par des cercles en traits pointillés. La station d'accès 32 est ici une station d'accès « régionale » située dans la couverture utilisateur 6 pavée par l'ensemble des spots utilisateurs tandis que la station 34 est ici une station d'accès « mondiale » ou une autre station régionale, située en dehors de toute zone de couverture utilisateur.

Les spots utilisateurs émission 22, 24, 26, 28, 30, 32, 34, 36, 38, 40, 42 et réception 23, 25, 27, 29, 31, 33, 35, 37, 39, 41, 43 sont générés par un premier système antennaire passif de la charge utile tandis que les spots d'accès GW émission 44, 46 et réception 45, 47 sont générés par un deuxième système antennaire passif de la charge utile.

Suivant la Figure 3, un exemple de plan de fréquences 102 VHTS d'une charge utile de télécommunications multifaisceaux selon l'invention de type VHTS est illustré.

Pour les liaisons d'accès GW (i.e. GateWay), le plan de fréquence Rx (réception satellite) VHTS exploite une première bande de réception satellite Rx 104 qui utilise de la bande V, comprise entre 47,2 GHz et 51,4 GHz, décomposée ici en deux sous-bandes, une première sous-bande 106 et une deuxième sous-bande 108, pour limiter la bande passante de chaque sous-bande en réception, et qui utilise une partie de la bande Ka en tant que troisième sous-bande 110, par exemple comprise entre 27,5 GHz et 29,5 GHz.

En variante, d'autres découpages de la bande V et de la bande Ka peuvent être envisagés pour former la première bande de réception de réception satellite.

Pour les liaisons d'accès GW (i.e. GateWay), le plan de fréquence Tx (émission satellite) VHTS exploite une première bande d'émission satellite Tx 112 qui utilise une partie de bande Q en tant que quatrième sous-bande 114, comprise entre 37,5 GHz et 42,5 GHz.

Pour les liaisons utilisateur (i.e. « user » en anglais), le plan de fréquence exploite une deuxième bande de réception satellite Rx 122 qui utilise une partie de la bande Ka en tant que cinquième sous-bande 124, comprise entre 29,5 GHz et 30 GHz, et exploite une deuxième bande d'émission satellite Tx 126 qui utilise une partie de la bande Ka en tant que sixième sous-bande 128, comprise entre 17,3 GHz et 20,2 GHz.

Suivant la Figure 4, un exemple de plan de fréquences 132 HTS d'une charge utile de télécommunications multifaisceaux selon l'invention de type HTS est illustré.

Pour les liaisons d'accès GW, le plan de fréquence (réception satellite) Rx HTS exploite une première bande de réception satellite Rx 134 HTS qui utilise ici une partie de la bande Ka en tant que première sous-bande 136, comprise entre 27,5 GHz et 29,5 GHz, et le plan de fréquence (émission satellite) Tx exploite une première bande d'émission satellite Tx 138 HTS qui utilise une partie de la bande Ka en tant que deuxième sous-bande 140, comprise entre 17,7 GHz et 20,2 GHz.

Pour les liaisons utilisateur, le plan de fréquence Rx HTS exploite une deuxième bande de réception satellite Rx 142 HTS qui utilise une partie de la bande Ka en tant que troisième sous-bande 144, comprise entre 29,5 GHz et 30 GHz, et exploite une deuxième bande d'émission satellite Tx 146 HTS qui utilise une partie de la bande Ka en tant que quatrième sous-bande 148, comprise entre 17,3 GHz et 17,7 GHz.

Il est à remarquer que lorsque la station d'accès est situé en dehors de la couverture utilisateur 6, la première bande de réception satellite Rx 134 peut être étendue en une bande 150 comprise entre 27,5 GHz et 30 GHz.

De manière générale et indépendamment du type de charge utile de télécommunications multifaisceaux (VHTS ou HTS), la première bande de réception satellite Rx peut être décomposée suivant un premier jeu en une ou plusieurs sous-bandes d'un ou plusieurs type(s) de bande, la première bande d'émission satellite Tx peut être décomposée suivant un deuxième jeu en une ou plusieurs sous-bandes d'un ou plusieurs type(s) de bande, la deuxième bande de réception satellite Rx peut être décomposée suivant un troisième jeu en une ou plusieurs sous-bandes d'un ou plusieurs type(s) de bande, la deuxième bande d'émission satellite Tx peut être décomposée suivant un quatrième jeu en une ou plusieurs sous-bandes d'un ou plusieurs type(s) de bande, les premier, deuxième, troisième et quatrième jeux de sous-bandes étant compatibles pour ne pas interférer entre eux.

Suivant la Figure 5 et un premier mode de réalisation d'architecture, une charge utile de télécommunications spatiales multifaisceaux 202 selon l'invention pour des applications VHTS comprend un premier système antennaire multifaisceaux 204 d'antennes passives avec une composante réception Rx $204_1$ et une composante émission Tx $204_2$, un deuxième système antennaire multifaisceaux 206 d'antennes passives avec une composante réception Rx $206_1$ et une composante émission Tx $206_2$, un coeur numérique DTP 210 basé sur un processeur de traitement numérique transparent DTP 212, et un ensemble de commutation 214 à saut de faisceau BH (en anglais « Beam Hopping ») radiofréquence RF (en anglais « RadioFrequency »).

Le premier système antennaire multifaisceaux 204 d'antennes passives est configuré pour recevoir depuis et émettre vers les spots de stations d'accès GW 45, 47 ; 44, 46 respectivement dans la première bande de réception Rx satellite 104 et la première bande d'émission Tx satellite 112 du plan de fréquence VHTS de la Figure 3.

Le deuxième système antennaire multifaisceaux 206 d'antennes passives est configuré pour recevoir depuis et émettre vers la zone de couverture utilisateur 6 respectivement dans la deuxième bande de réception Rx satellite et la deuxième bande d'émission Tx satellite de la Figure 3, en générant de multiples spots utilisateurs de réception satellite, en particulier les spots utilisateurs de réception 23, 25, 27, 29, 31, 33, 35, 37, 39, 41, 43 de la Figure 2, et de multiples spots utilisateurs d'émission satellite, en particulier les spots utilisateurs d'émission satellite 22, 24, 26, 28, 30, 32, 34, 36, 38, 40, 42 de la Figure 2.

Le coeur numérique DTP 210, basé sur le processeur de traitement numérique transparent DTP 212 est dimensionné au travers d'un nombre d'accès suffisant en entrée Rx et en sortie Tx pour être connecté : en entrée à tous les spots d'accès réception Rx des stations d'accès GW et à tous les spots utilisateurs réception Rx, et en sortie à tous les spots utilisateurs émission Tx et à tous les spots d'accès émission Tx des stations d'accès GW, et est configuré pour offrir une connectivité totale et une gestion fréquentielle totalement flexible. Compte tenu des plans de fréquence à couvrir la solution optimale consiste à considérer un processeur capable de gérer jusqu'à 2.9 GHz par accès et d'avoir un nombre d'accès d'entrée et d'accès de sortie capables d'interconnecter tous les spots de type « terminaux utilisateurs » et tous les spots de type « stations d'accès ».

Suivant la Figure 5, l'ensemble de commutation BH RF 214 est formé par une ou plusieurs matrices BH de commutateurs RF, ici une matrice BH émission Mj désignée par la référence numérique 216 et une matrice BH réception Nj désignée par la référence numérique 218, branchées respectivement en émission satellite Tx sur des accès sources de spots utilisateur émission Tx et en réception satellite Rx sur des accès sources de spots utilisateur réception Rx, pour mettre en oeuvre un fonctionnement en saut de faisceaux sur des groupements Gj / G'j ,de spots utilisateurs Tx et/ou Rx dont le nombre de spots Rj (pour les spots utilisateurs Tx), R'j (pour les spots utilisateur Rx) est inférieur ou égal au nombre total P de spots de stations d'accès.

En variante, l'ensemble de commutation BH RF est formé par une ou plusieurs matrices de commutateurs RF branchées sur des accès sources de spots utilisateur en émission satellite Tx seulement.

De manière générale, les premier et deuxième systèmes antennaires de la charge utile multifaisceaux VHTS sont configurés pour générer des spots utilisateur et des spots d'accès dans le cas général d'un plan de fréquences VHTS tel que décrit dans la Figure 3, c'est à dire dans le cas général où la première bande de réception Rx comprend la réception de la bande V, comprise entre 47,2 GHz et 51,4 GHz, divisée en une ou plusieurs sous-bande(s) (typiquement deux sous-bandes, première et deuxième), et/ou la réception d'une partie de la bande Ka en tant que troisième sous-bande, incluse dans l'intervalle compris entre 27,5 GHz et 29,5 GHz.

Suivant la Figure 5, le premier système antennaire multifaisceaux 204 comprend, dans sa composante réception $204_1$, un nombre entier P d'accès 222, 224 aux spots réception des stations d'accès GW égal au nombre total des stations d'accès GW et est configuré pour que chaque spot réception de station d'accès GW desserve une unique station d'accès. Ici par exemple, l'accès 222 est l'accès correspondant au spot réception 47 de la station d'accès « mondiale » 34 et utilisant les première et deuxième sous-bandes en bande V de la première bande 104 de réception satellite, et l'accès 224 est l'accès correspondant au spot réception 45 de la station d'accès « régionale » 32 utilisant la troisième sous-bande en bande Ka de la première bande 104 Rx de réception satellite.

De manière générale, le nombre P de stations d'accès et donc d'accès de spot réception Rx de station d'accès est supérieur ou égal à 2.

La charge utile multifaisceaux VHTS 202 comprend en outre un ensemble de premiers amplificateurs à faible bruit LNA dont le nombre est égal au nombre total P des stations d'accès GW, chaque LNA étant connecté entre l'unique accès d'un spot réception satellite Rx d'une station d'accès différente et une entrée du processeur numérique transparent DTP 212.

Ici, deux premiers amplificateurs LNAs 232, 234 sont seulement représentés sur la Figure 5 et sont respectivement connectés aux accès 222, 224 des spots réception satellite Rx des stations d'accès 34, 32.

De manière générale, le nombre P de premiers amplificateurs LNA est supérieur ou égal à 2.

Le premier système antennaire multifaisceaux 204 dans sa composante émission Tx $204_2$ comprend un nombre d'accès aux spots émission des stations d'accès GW égal au nombre total P des stations d'accès GW et est configuré pour que chaque spot émission de station d'accès desserve une unique station d'accès GW. Ici un seul accès 242 est représenté ; cet accès correspond au spot d'accès émission 46 de la station d'accès « mondiale » 34 et utilise la quatrième sous-bande 114 en bande Q de la première bande Tx d'accès 112.

La charge utile multifaisceaux VHTS 202 comprend en outre un deuxième ensemble de deuxièmes amplificateurs de puissance HPA dont le nombre est égal au nombre total P des stations d'accès GW, chaque deuxième amplificateur de puissance HPA étant connecté entre l'unique accès d'un spot émission Tx d'une station d'accès GW différente et une sortie du processeur numérique transparent DTP 212.

Ici, seul un deuxième amplificateur de puissance HPA 252 parmi les P amplificateurs HPA est représenté, en étant connecté à l'accès 242 du spot d'accès émission 46 de la station d'accès « mondiale » 34.

Suivant la Figure 5, le deuxième système antennaire multifaisceaux 206 comprend dans sa composante émission $206_2$ un nombre entier N d'accès source 262, 264, 266 aux spots utilisateurs d'émission satellite, seuls trois accès étant ici représentés par souci de simplicité de la Figure 5.

La charge utile multifaisceaux VHTS 202 comprend un nombre K1 de troisièmes amplificateurs RF de puissance HPA 276 connectés directement à K1 accès source aux spots utilisateurs d'émission satellite pris parmi les N accès de spot utilisateur d'émission, K1 étant un nombre entier inférieur ou égal à N-1, et un nombre K2 non nul de troisième(s) amplificateur(s) RF de puissance HPA 278 connecté(s) aux N-K1 accès sources restants de spot utilisateur d'émission au travers de K2 matrices de commutations Mj, permettant chacune la mise en oeuvre d'un saut de faisceaux sur un groupement Gj différent de spots utilisateurs Tx dont le nombre de spots émission Rj est supérieur ou égal à 2 et inférieur ou égal au nombre total P de spots de stations d'accès GW, les nombres entiers N, K1, K2 et Rj, j variant de 1 à K2 vérifiant la relation :

$$N = K1 + \sum_{j=1}^{K2} R_j$$

Il est à remarquer que dans le cas où aucun des accès sources aux spots utilisateurs d'émission n'est relié à une matrice de commutation BH émission, le nombre K1 est égal à N et le nombre K2 est égal à 0.

Suivant la Figure 5, le deuxième système antennaire multifaisceaux 206 comprend dans sa composante réception $206_1$ un nombre entier d'accès source 282, 284, 286 aux spots utilisateurs de réception satellite égal au nombre N.

La charge utile multifaisceaux VHTS 202 comprend un nombre K'1 de quatrième(s) amplificateur(s) RF à faible bruit LNA 296 connectés directement à K1 accès source aux spots utilisateurs de source de réception satellite pris parmi les N accès de spot utilisateur de réception, K1 étant identique au nombre K1 de troisièmes amplificateurs RF de puissance connectés directement aux accès source de spot utilisateur d'émission, et un nombre K'2 de quatrième(s) amplificateur(s) RF à faible bruit LNA 298 connectés aux N-K'1 accès sources restants de spot utilisateur d'émission au travers de K'2 matrices de commutations Nj, permettant chacune la mise en oeuvre d'un saut de faisceaux sur un groupement G'j différent de spots utilisateurs Rx dont le nombre de spots réception R'j est supérieur ou égal à 2 et inférieur ou égal au nombre total P de spots réception de stations d'accès GW, les nombres entiers N, K'1, K'2 et R'j, j variant de 1 à K'2 vérifiant la relation :

$$N = K'1 + \sum_{j=1}^{K'2} R'_j$$

Il est à remarquer que dans le cas où aucun des accès source aux spots utilisateurs réception n'est relié à une matrice de commutation BH réception, le nombre K'1 est égal à N et le nombre K'2 est égal à 0.

Il est à remarquer qu'en variante la charge utile multifaisceaux VHTS peut ne pas comporter de matrice de commutation BH de réception tandis que dans le cas général la charge utile multifaisceaux VHTS comporte toujours une matrice de commutation BH d'émission. En effet, si les besoins du système veulent limiter le fonctionnement en saut de faisceau sur les liens aller ou direct (en anglais Forward) seulement, il est possible d'avoir une répartition fréquentielle en réception Rx pour les spots utilisateur et ainsi d'éviter un fonctionnement en saut de faisceau sur les voies retour (en anglais « return »).

Suivant la Figure 5, la charge utile multifaisceaux VHTS 202 comprend également des chaines de conversion 302, 304, 306, 308, 310, 320, 322, 324, connectées autour du processeur numérique transparent DTP 212, et configurées pour interfacer les composants RF de la charge utile fonctionnant dans les première et deuxième bandes d'émission Tx et de réception Rx (Ka, V & Q) et des entrées et sorties du processeur numérique transparent DTP 212 fonctionnant à une fréquence intermédiaire utile compatible des largeurs de bande utile gérées par accès en réception et en émission du processeur. Il est à remarquer que si le coeur numérique 210 de la charge utile VHTS 202, c'est-à-dire le DTP 212, est capable de réaliser un échantillonnage numérique directement aux fréquences RF dans les première et deuxième bandes, en mode réception et en mode émission, il n'est pas nécessaire d'utiliser de convertisseurs de fréquence.

Le processeur numérique transparent DTP 212 est configuré pour créer des chemins de fréquence caractérisés par une connectivité entre les spots d'accès GW et les spots utilisateurs en voie directe et entre les spots utilisateurs et les spots d'accès GW en voie retour, et un plan de fréquences prenant en compte un besoin de trafic et des contraintes de coordination des fréquences.

Chaque matrice Mj, Nj, de commutateurs RF sur des accès sources de spots utilisateurs en émission satellite Tx seulement ou en émission satellite Tx et en réception satellite Rx, partie de l'ensemble 214 de commutation BH RF, est configurée pour distribuer temporellement, en émission satellite Tx le signal amplifié par l'amplificateur de puissance directement connecté en amont de la matrice Mj sur les spots utilisateurs suivant un plan d'allocation temporel émission Tx de tranches temporelles d'émission prédéterminé, et en réception satellite Rx les signaux des spots utilisateurs connectés à une même matrice Nj sur l'amplificateur faible bruit directement connecté en aval de ladite matrice Nj suivant un plan d'allocation temporel réception Rx de tranches temporelles de réception prédéterminé.

Suivant la Figure 5, la charge utile multifaisceaux VHTS 202 comprend également un calculateur ou un ensemble de plusieurs calculateurs de gestion et de contrôle, désigné par la référence numérique 332, pour configurer à l'aide d'un premier processeur configurateur ou d'un premier module logiciel configurateur 334 de DTP de manière statique ou dynamique le processeur de traitement numérique DTP 212, et pour configurer, à l'aide d'un deuxième processeur configurateur ou d'un deuxième module logiciel 336 configurateur de saut(s) de faisceaux, la ou les matrices de commutateurs BH 214, 216 pour la mise en oeuvre de leurs sauts de faisceaux.

Le processeur de traitement numérique DTP 212 est configuré en termes d'une matrice de connectivité depuis les spots d'accès GW vers les spots utilisateurs en voie directe et depuis les spots utilisateurs vers les spots d'accès en voie retour et en termes d'un plan de fréquences.

La ou les matrices de commutateurs BH 214, 216, 218 est ou sont configurée(s) pour mettre en oeuvre des sauts de faisceaux en termes d'un plan d'allocation temporel émission Tx, ou en termes d'un plan d'allocation temporel émission Tx et d'un plan d'allocation temporel réception Rx.

La matrice de connectivité, le plan de fréquence et le(s) plan(s) d'allocation temporel dépendent de la distribution spatiale et temporelle de la demande de trafic dans l'ensemble des spots utilisateurs et de contraintes de coordination des fréquences.

Suivant la Figure 5, la charge utile multifaisceaux VHTS 202 comprend également une mémoire 342 de configurations du processeur de traitement numérique DTP 212 et de la ou des matrices de commutateurs BH 214, 216, 218, dans lesquelles des configurations différentes en termes de triplets, formés chacun par une matrice de connectivité, un plan de fréquence, un plan d'allocation temporel émission Tx, ou de quadruplets formés chacun par une matrice de connectivité, un plan de fréquence, un plan d'allocation temporel émission Tx et un plan d'allocation temporel réception Rx, les configurations étant activables à des instants différents formant une séquence d'activation des configurations.

Ainsi, le calculateur ou l'ensemble de plusieurs calculateurs de gestion et de contrôle 332 est apte à gérer et contrôler, de manière statique ou dynamique, d'une part le processeur numérique transparent DTP 212 en termes de plan de connectivité et de plan de fréquence, et d'autre part la matrice 216 ou les deux matrices de commutateurs RF 216, 218 en termes de la ou des séquences de commande des sauts de faisceaux en émission seulement, ou en émission et réception.

Le processeur de traitement numérique transparent DTP 212 est configuré pour fournir une flexibilité totale en terme d'allocation de bande passante aux spots utilisateurs en fonction des besoins de trafic sans sur dimensionner le nombre de stations d'accès GW.

Chaque matrice Mj de commutateurs BH émission 216, connectée à un unique amplificateur de puissance HPA 278 et associée à un groupe Gj de spots utilisateurs émission, est configurée pour connecter à tour de rôle un spot utilisateur émission du groupe Gj à l'amplificateur de puissance HPA et lui permettre de recevoir toute la bande amplifiée par ledit HPA. En même temps, le processeur de traitement numérique transparent DTP 212 est configuré pour charger chaque amplificateur HPA 278, connecté à une matrice Mj de commutateurs BH émission 216, avec les bandes de fréquence effectivement disponibles du fait de contraintes possibles de coordination pour l'ensemble Gj des spots utilisateurs émission connectés au même HPA.

Le processeur de traitement numérique transparent DTP 212 est configuré pour charger chaque amplificateur HPA, connecté à une matrice Mj de commutateurs BH émission, avec la quantité de bande de fréquence requise pour répondre aux variations temporelles de trafic demandées aux spots utilisateurs émission du groupe Gj connectés à l'amplificateur de puissance HPA correspondant. En même temps, les matrices Mj de commutateurs BH émission 216 sont configurés en saut de faisceaux avec une modulation possible du partage temporel du temps entre les spots d'un même groupe Gj connectés à un même HPA de sorte à venir compléter l'aptitude du DTP 212 à allouer plus ou moins de bande et répondre aux variations de trafic plus rapides auxquelles le DTP ne peut pas répondre.

Le processeur de traitement numérique transparent DTP 212 et les matrices de commutateurs à saut de faisceaux 216, 218 sont configurés pour connecter plusieurs spots d'accès de stations d'accès Rx à un même spot utilisateur Tx tout en assurant une gestion indépendante des gains de canaux issus de chaque station d'accès GW connectées audit même spot utilisateur émission.

Ainsi, la charge utile multifaisceaux VHTS 202 telle que décrite dans la Figure 5 offre avantageusement les aptitudes et capacités et suivantes :

.- une flexibilité totale en terme d'allocation de bande passante aux spots utilisateurs en fonction des besoins de trafic sans devoir sur-dimensionner le nombre de station d'accès GW, cette fonctionnalité étant offerte par le DTP 212 qui offre une capacité inégalée pour allouer la bande requise à chaque HPA servant un ou plusieurs spots utilisateurs, et la capacité de charger plus ou moins chaque HPA selon le besoin de trafic ;

.- une aptitude à offrir toute la bande disponible à chaque spot utilisateur et à éviter des problèmes de coordination de fréquence, cet évitement étant rendu possible grâce :

.* à un fonctionnement BH en saut de faisceau qui permet à chaque spot utilisateur connecté à un même HPA de recevoir toute la bande amplifiée par le HPA, et

.* à la capacité du DTP 212 à charger chaque HPA avec les bandes de fréquence effectivement disponibles (une limitation pouvant intervenir du fait des contraintes possibles de coordination) pour les spots connectés au même HPA.

La charge utile multifaisceaux VHTS 202 telle que décrite dans la Figure 5 offre également et avantageusement les aptitudes et capacités et suivantes :

.- une capacité de variation dynamique de la capacité allouée à chaque spot utilisateur selon les variations de demande de trafic grâce :

.* d'une part au DTP qui charge chaque HPA avec la quantité de bande de fréquence requise pour répondre aux besoins des spots utilisateurs connectés audit HPA, par exemple pour répondre aux variations journalières de trafic, et

.* d'autre part au fonctionnement BH offert par la matrice BH 216 de commutateurs et au partage temporel permis du temps entre les spots utilisateurs connectés à un même HPA qui vient en complément de l'aptitude du DTP 212 à allouer plus ou moins de bande de fréquence et qui peut être utilisé pour les variations de trafic plus rapides que celles compensées par le DTP 212 ;

.- une rationalisation du nombre de stations d'accès GWs grâce à une architecture charge utile qui permet un dimensionnement sur la capacité réellement demandée et non pas sur la somme des maximas de capacité qui peuvent potentiellement être vus par les spots utilisateurs;

.- une aptitude de déploiement progressif de la capacité de transmission avec un minimum de stations d'accès GW utilisé en début de la mise en service du système de télécommunications tout en étant en mesure de servir les spots utilisateurs en demande de ressources de transmission ; le DTP 212 offre la possibilité de servir tous les spots utilisateurs avec une seule station d'accès GW ;

.- une aptitude à réaliser des liaisons de type réseau interne ou « mesh » permettant de connecter directement certains spots utilisateurs entre eux ou certains spots d'accès GW entre eux au niveau bord de la charge utile sans passer par le sol ;

.- la capacité de connecter plusieurs stations d'accès GW à un même spot utilisateur tout en assurant une gestion indépendante des gains des canaux issus de chaque station d'accès.

La charge utile multifaisceaux VHTS 202 telle que décrite dans la Figure 5 offre encore et avantageusement les aptitudes et capacités et suivantes :

.- une capacité de multidiffusion (en anglais « multicast ») et de diffusion générale (en anglais « broadcast ») des canaux reçus, ce qui offre une capacité maximale de rationalisation de la bande par rapport aux architectures de charge utile VHTS connues,

.- une capacité de surveillance (en anglais « monitoring ») améliorée de la totalité du trafic qui va transiter dans le DTP par l'analyse spectrale des spectres reçus et transmis.

Suivant la Figure 6 et un deuxième mode de réalisation d'architecture, une charge utile de télécommunications spatiales multifaisceaux 402 selon l'invention pour des applications HTS comprend un premier système antennaire multifaisceaux 404 d'antennes passives avec une composante réception Rx $404_1$ et une composante émission Tx $404_2$, un deuxième système antennaire multifaisceaux 606 d'antennes passives avec une composante réception Rx $406_1$ et une composante émission Tx $406_2$, un coeur numérique DTP 410 basé sur un processeur de traitement numérique transparent DTP 412, et un ensemble de commutation 414 à saut de faisceau BH (en anglais « Beam Hopping ») radiofréquence RF (en anglais « RadioFrequency »).

Le premier système antennaire multifaisceaux 404 d'antennes passives est configuré pour recevoir depuis et émettre vers les spots de stations d'accès GW 45, 47 ; 44, 46 respectivement dans la première bande de réception Rx satellite 134 et la première bande d'émission Tx satellite 138 du plan de fréquence HTS 132 de la Figure 4.

Le deuxième système antennaire multifaisceaux 406 d'antennes passives est configuré pour recevoir depuis et émettre vers la zone de couverture utilisateur 6 respectivement dans la deuxième bande de réception Rx satellite et la deuxième bande d'émission Tx satellite de la Figure 4, en générant de multiples spots utilisateurs de réception satellite, en particulier les spots utilisateurs de réception 23, 25, 27, 29, 31, 33, 35, 37, 39, 41, 43 de la Figure 2, et de multiples spots utilisateurs d'émission satellite, en particulier les spots utilisateurs d'émission satellite 22, 24, 26, 28, 30, 32, 34, 36, 38, 40, 42 de la Figure 2.

Le coeur numérique DTP 410, basé sur le processeur de traitement numérique transparent DTP 412 est dimensionné au travers d'un nombre d'accès suffisant en entrée Rx et en sortie Tx pour être connecté : en entrée à tous les spots d'accès réception Rx des stations d'accès GW et à tous les spots utilisateurs réception Rx, et en sortie à tous les spots utilisateurs émission Tx et à tous les spots d'accès émission Tx des stations d'accès GW, et est configuré pour offrir une connectivité fréquentielle totale. Compte tenu du plan de fréquence à couvrir la solution optimale consiste ici à considérer un processeur capable de gérer jusqu'à 2.9 GHz par accès et d'avoir un nombre d'accès d'entrée et des sorties capables de connecter tous les spots de type « terminaux utilisateurs » et tous les spots de type « stations d'accès ».

Il est à remarquer que dans le cas d'un plan de fréquence offrant davantage de ressources en fréquence, la capacité de gestion du processeur devra être étendue.

Suivant la Figure 6, l'ensemble de commutation BH RF 414 est formé par une ou plusieurs matrices BH de commutateurs RF, ici une matrice BH émission Mj désignée par la référence numérique 416 et une matrice Nj désignée par la référence numérique 418, branchées respectivement en émission satellite Tx sur des accès source de spots utilisateur émission Tx et en en réception satellite Rx sur des accès source de spots utilisateur réception Rx , pour mettre en oeuvre un fonctionnement en saut de faisceaux sur des groupements Gj / G'j, de spots utilisateurs Tx et/ou Rx dont le nombre de spots Rj , R'j est inférieur ou égal au nombre total P de spots de stations d'accès.

En variante, l'ensemble de commutation BH RF est formé par une ou plusieurs matrices de commutateurs RF sur des accès sources de spots utilisateur en émission satellite Tx seulement.

Suivant la Figure 6, le premier système antennaire multifaisceaux 404 dans sa composante réception $404_1$ comprend un nombre entier P d'accès 422, 424 aux spots réception des stations d'accès GW égal au nombre total des stations d'accès GW et est configuré pour que chaque spot réception de station d'accès GW desserve une unique station d'accès. Ici, par exemple, l'accès 622 est l'accès correspondant au spot réception 47 de la station d'accès « mondiale » 34 et utilisant la première sous-bande en bande Ka de la première bande Rx, et l'accès 424 est l'accès correspondant au spot d'accès réception 45 de la station d'accès « régionale » 32 utilisant la sous-bande en bande Ka 148 de la première bande Rx 146 de réception satellite.

De manière générale, le nombre P de stations d'accès et donc d'accès de spot réception Rx de station d'accès est supérieur ou égal à 2.

La charge utile multifaisceaux VHTS 402 comprend en outre un ensemble de premiers amplificateurs à faible bruit LNA dont le nombre est égal au nombre total P des stations d'accès GW, chaque LNA étant connecté entre l'unique accès d'un spot réception satellite Rx d'une station d'accès différente et une entrée du processeur numérique transparent DTP 412.

Ici, deux premiers amplificateurs LNAs 432, 434 sont seulement représentés sur la Figure 6 et sont respectivement connectés aux accès 422, 424 des spots réception satellite Rx des stations d'accès 34, 32.

De manière générale, le nombre P de premiers amplificateurs LNA est supérieur ou égal à 2.

Le premier système antennaire multifaisceaux 404 dans sa composante émission Tx $404_2$ comprend un nombre d'accès aux spots émission des stations d'accès GW égal au nombre total P des stations d'accès GW et est configuré pour que chaque spot émission de station d'accès desserve une unique station d'accès GW. Ici un seul accès 442 est représenté ; cet accès correspond au spot d'accès émission 46 de la station d'accès « mondiale » 34 et utilise la troisième sous-bande 148 en bande Ka de la première bande Tx d'accès 146.

La charge utile multifaisceaux HTS 402 comprend en outre un deuxième ensemble de deuxième amplificateurs de puissance HPA dont le nombre est égal au nombre total P des stations d'accès GW, chaque deuxième amplificateur de puissance HPA étant connectés entre l'unique accès d'un spot émission Tx d'une station d'accès différente et une sortie du processeur numérique transparent DTP 412.

Ici, seul un deuxième amplificateur de puissance HPA 452 parmi les P amplificateurs HPA est représenté, en étant connecté à l'accès 442 du spot d'émission de 46 de la station d'accès 34.

Suivant la Figure 6, le deuxième système antennaire multifaisceaux 406 comprend dans sa composante émission $406_2$ un nombre entier N d'accès source 462, 464, 466 aux spots utilisateurs d'émission satellite, seuls trois accès étant représentés par souci de simplicité de la Figure 6.

La charge utile multifaisceaux VHTS 402 comprend un nombre K1 de troisièmes amplificateurs RF de puissance HPA 476 connectés directement à K1 accès source aux spots utilisateurs d'émission satellite pris parmi les N accès de spot utilisateur d'émission, K1 étant un nombre entier inférieur ou égal à N-1, et un nombre K2 non nul de troisième(s) amplificateur(s) RF de puissance HPA 478 connecté(s) aux N-K1 accès sources restants de spot utilisateur d'émission au travers de K2 matrices de commutations Mj, permettant chacune la mise en oeuvre d'un saut de faisceaux sur un groupement Gj différent de spots utilisateurs Tx dont le nombre de spots émission Rj est supérieur ou égal à 2 et inférieur ou égal au nombre total P de spots de stations d'accès GW, les nombres entiers N, K1, K2 et Rj, j variant de 1 à K2 vérifiant la relation :

$$N = K1 + \sum_{j=1}^{K2} R_j$$

Il est à remarquer que dans le cas où aucun des accès source aux spots utilisateurs d'émission n'est relié à une matrice de commutation BH émission, le nombre K1 est égal à N et le nombre K2 est égal à 0.

Suivant la Figure 6, le deuxième système antennaire multifaisceaux 406 comprend dans sa composante réception $406_1$ un nombre entier d'accès source 482, 484, 486 aux spots utilisateurs de réception émission satellite égal au nombre N.

La charge utile multifaisceaux VHTS 402 comprend un nombre K'1 de quatrième(s) amplificateur(s) RF à faible bruit LNA 496 connectés directement à K1 accès source aux spots utilisateurs de source de réception satellite pris parmi les N accès de spot utilisateur de réception, K1 étant identique au nombre K1 de troisièmes amplificateurs RF de puissance connectés directement aux accès source de spot utilisateur d'émission, et un nombre K'2 de quatrième(s) amplificateur(s) RF à faible bruit LNA 498 connectés aux N-K'1 accès sources restants de spot utilisateur d'émission au travers de K'2 matrices de commutations Nj, permettant chacune la mise en oeuvre d'un saut de faisceaux sur un groupement G'j différent de spots utilisateurs Rx dont le nombre de spots réception R'j est supérieur ou égal à 2 et inférieur ou égal au nombre total P de spots réception de stations d'accès GW, les nombres entiers N, K'1, K'2 et R'j, j variant de 1 à K'2 vérifiant la relation :

$$N = K'1 + \sum_{j=1}^{K'2} R'_j$$

Il est à remarquer que dans le cas où aucun des accès source aux spots utilisateurs de réception n'est relié à une matrice de commutation, le nombre K'1 est égal à N et le nombre K'2 est égal à 0.

Il est à remarquer qu'en variante la charge utile multifaisceaux HTS peut ne pas comporter de matrice de commutation BH de réception tandis que dans le cas général la charge utile multifaisceaux HTS comporte toujours une matrice de commutation BH d'émission. En effet, si les besoins du système veulent limiter le fonctionnement en saut de faisceau sur les liens aller ou direct (en anglais Forward) seulement, il est possible d'avoir une répartition fréquentielle en réception Rx pour les spots utilisateur et ainsi d'éviter un fonctionnement en saut de faisceau sur les voies retour (en anglais « return »).

Suivant la Figure 6, la charge utile multifaisceaux HTS 402 comprend également des chaines de conversion 502, 504, 506, 508, 520, 522, 524, connectées autour du processeur numérique transparent DTP 412, et configurées pour interfacer les composants RF de la charge utile fonctionnant dans les première et deuxième bandes d'émission Tx et de réception Rx (Ka uniquement) et des entrées et sorties du processeur numérique transparent DTP 412 fonctionnant à une fréquence intermédiaire utile compatible des largeurs de bande utile gérées par accès en réception et en émission du processeur. Il est à remarquer que si le coeur numérique 410 de la charge utile HTS 402, c'est-à-dire le DTP 412, est capable de réaliser un échantillonnage numérique directement aux fréquences RF dans les première et deuxième bandes, en mode réception et en mode émission, il n'est pas nécessaire d'utiliser de convertisseurs de fréquence.

Le processeur numérique transparent DTP 412 est configuré pour créer des chemins de fréquence caractérisés par une connectivité entre les spots d'accès GW et les spots utilisateurs en voie directe et entre les spots utilisateurs et les spots d'accès GW en voie retour, et un plan de fréquences prenant en compte un besoin de trafic et des contraintes de coordination des fréquences.

Chaque matrice Mj, Nj, de commutateurs RF sur des accès sources de spots utilisateurs en émission satellite Tx seulement ou en émission satellite Tx et en réception satellite Rx, partie de l'ensemble 414 de commutation BH RF, est configurée pour distribuer temporellement, en émission satellite Tx le signal amplifié par l'amplificateur de puissance directement connecté en amont de la matrice Mj sur les spots utilisateurs suivant un plan d'allocation temporel émission Tx de tranches temporelles d'émission prédéterminé, et en réception satellite Rx les signaux des spots utilisateurs connectés à une même matrice Nj sur l'amplificateur faible bruit directement connecté en aval de ladite matrice Nj suivant un plan d'allocation temporel réception Rx de tranches temporelles de réception prédéterminé.

Suivant la Figure 6, la charge utile multifaisceaux VHTS 402 comprend également un calculateur ou un ensemble de plusieurs calculateurs de gestion et de contrôle, désigné par la référence numérique 532, pour configurer à l'aide d'un premier processeur configurateur ou d'un premier module logiciel 534 configurateur de DTP de manière statique ou dynamique le processeur de traitement numérique DTP 412, et pour configurer, à l'aide d'un deuxième processeur configurateur ou d'un deuxième module logiciel 536 configurateur de saut(s) de faisceaux, la ou les matrices de commutateurs BH 414, 416 pour la mise en oeuvre de leurs sauts de faisceaux.

Le processeur de traitement numérique DTP 412 est configuré en termes d'une matrice de connectivité depuis les spots d'accès GW vers les spots utilisateurs en voie directe et depuis les spots utilisateurs vers les spots d'accès en voie retour et en termes d'un plan de fréquences.

La ou les matrices de commutateurs BH 414, 416, 418 est ou sont configurée(s) pour mettre en oeuvre des sauts de faisceaux en termes d'un plan d'allocation temporel émission Tx, ou en termes d'un plan d'allocation temporel émission Tx et d'un plan d'allocation temporel réception Rx.

La matrice de connectivité, le plan de fréquence et le(s) plan(s) d'allocation temporel dépendent de la distribution spatiale et temporelle de la demande de trafic dans l'ensemble des spots utilisateurs et de contraintes de coordination des fréquences.

Suivant la Figure 6, la charge utile multifaisceaux HTS 402 comprend également une mémoire 542 de configurations du processeur de traitement numérique DTP 412 et de la ou des matrices de commutateurs BH 414, 416, 418, dans lesquelles des configurations différentes en termes de triplets, formés chacun par une matrice de connectivité, un plan de fréquence, un plan d'allocation temporel émission Tx ou de quadruplets formés chacun par une matrice de connectivité, un plan de fréquence, un plan d'allocation temporel émission Tx et un plan d'allocation temporel réception Rx, les configurations étant activables à des instants différents formant une séquence d'activation des configurations.

Ainsi, le calculateur ou l'ensemble de plusieurs calculateurs de gestion et de contrôle 432 est apte à gérer et contrôler, de manière statique ou dynamique, d'une part le processeur numérique transparent DTP 412 en termes de plan de connectivité et de plan de fréquence, et d'autre part la matrice 416 ou les deux matrices de commutateurs RF 416, 418 en termes de la ou des séquences de commande des sauts de faisceaux en émission seulement, ou en émission et réception.

Le processeur de traitement numérique transparent DTP 412 est configuré pour fournir une flexibilité totale en terme d'allocation de bande passante aux spots utilisateurs en fonction des besoins de trafic sans sur dimensionner le nombre de stations d'accès GW.

Chaque matrice Mj de commutateurs BH émission 416, connectée à un unique amplificateur de puissance HPA 478 et associée à un groupe Gj de spots utilisateurs émission, est configurée pour connecter à tour de rôle un spot utilisateur émission du groupe Gj à l'amplificateur de puissance HPA et lui permettre de recevoir toute la bande amplifiée par ledit HPA. En même temps, le processeur de traitement numérique transparent DTP 412 est configuré pour charger chaque amplificateur HPA 478, connecté à une matrice Mj de commutateurs BH émission 416, avec les bandes de fréquence effectivement disponibles du fait de contraintes possibles de coordination pour l'ensemble Gj des spots utilisateurs émission connectés au même HPA.

Le processeur de traitement numérique transparent DTP 412 est configuré pour charger chaque amplificateur HPA, connecté à une matrice Mj de commutateurs BH émission, avec la quantité de bande de fréquence requise pour répondre aux variations temporelles de trafic demandées aux spots utilisateurs émission du groupe Gj connectés à l'amplificateur de puissance HPA correspondant. En même temps, les matrices Mj de commutateurs BH émission 416 sont configurés en saut de faisceaux avec une modulation possible du partage temporel du temps entre les spots d'un même groupe Gj connectés à un même HPA de sorte à venir compléter l'aptitude du DTP 412 à allouer plus ou moins de bande et répondre aux variations de trafic plus rapides auxquelles le DTP ne peut pas répondre.

Le processeur de traitement numérique transparent DTP 412 et les matrices de commutateurs à saut de faisceaux 416, 418 sont configurés pour connecter plusieurs spots d'accès de stations d'accès Rx à un même spot utilisateur Tx tout en assurant une gestion indépendante des gains de canaux issus de chaque station d'accès GW connectées audit même spot utilisateur émission.

Ainsi, la charge utile multifaisceaux HTS 402 telle que décrite dans la Figure 6 offre avantageusement les mêmes aptitudes et capacités que celles offertes par la charge utile multifaisceaux VHTS 502.

Suivant la Figure 7 et un premier exemple particulier de configuration 602 permise par la charge utile multifaisceaux selon l'invention des Figures 4 et 5, trois spots utilisateurs émission S1, S2, S3, formant un groupe ou agrégat en mode de saut de faisceaux, sont respectivement alimentés en leurs accès 612, 614, 616 de spot émission au travers d'une matrice de commutation BH 622 à trois sorties par un amplificateur de puissance HPA commun 624, lui-même alimenté par une sortie 628 du processeur de traitement numérique transparent DTP 212, 412, la sortie étant desservie au moins partiellement par une entrée du DTP (non représentée sur la Figure 7) connectée à l'accès correspondant d'une station d'accès GW, cette desserte des trois spots utilisateurs émission S1, S2, S3 étant mise en oeuvre avantageusement au travers de la flexibilité offerte par l'association du DTP et de la matrice de commutation BH 622 pour satisfaire ici une restriction règlementaire d'utilisation des fréquences et une variation dynamique et géographique de la demande de trafic.

Le DTP 212, 412 est ici configuré pour fournir en la sortie 628 un signal partagé en tranches de fréquence 632, 634, 636 sur les spots utilisateurs S1, S2, S2, le signal partagé utilisant toute la bande allouée aux spots utilisateurs à l'exception d'une portion de bande 638, enlevée pour satisfaire des contraintes règlementaires de coordination de fréquences.

La matrice de commutation BH 622 est ici configuré pour fournir sur ses trois sorties 642, 644, 646 le signal partagé en tranches de fréquence en le partageant en tranches de temps 652, 654, 656 sur les spots utilisateurs S1, S, S3.

Cet exemple de configuration met en évidence le degré élevé de flexibilité offert en termes de connectivité et d'allocation dynamique des ressources de transmission dans le respect des contraintes règlementaires de coordination des fréquences.

Suivant la Figure 8 et un deuxième exemple particulier de configuration permise par la charge utile multifaisceaux selon l'invention des Figures 4 et 5, la flexibilité apportée ici par le processeur de traitement numérique en termes de connectivité entre les spots d'accès GW, ici quatre spots d'accès GW1, GW2, GW3, GW4, et des spots utilisateurs, ici quatre spots utilisateur S1, S2, S3, S4, et en termes de plan de fréquences, permet de rationaliser le nombre de stations de connexion à utiliser.

Suivant la Figure 9 et un troisième exemple particulier de configuration permise par la charge utile multifaisceaux selon l'invention des Figures 4 et 5, la flexibilité apportée par le processeur de traitement numérique permet de déployer progressivement le nombre de stations d'accès au fur et à mesure que la demande de trafic augmente sur l'ensemble de la couverture de service.

## Revendications

1. Charge utile de télécommunications multifaisceaux pour des applications de télécommunications spatiales à débit très élevé (VHTS) ou de télécommunications spatiales à débit élevé (HTS) comprenant :

un premier système antennaire multifaisceaux (204 ; 404) d'antennes passives avec une composante réception Rx (204$_1$ ; 404$_1$) et une composante émission Tx (204$_2$ ; 404$_2$), configurées respectivement pour recevoir depuis des spots de station d'accès GW de réception Rx satellite et émettre vers des spots de station d'accès d'émission GW Tx satellite, respectivement dans une première bande de réception Rx satellite (104 ; 134) et une première bande d'émission Tx satellite (112; 138) et un deuxième système antennaire multifaisceaux (206 ; 406) d'antennes passives avec une composante réception Rx (206$_1$ ; 406$_1$) et une composante émission Tx (206$_2$ ; 406$_2$), configurées respectivement pour recevoir depuis et émettre vers une zone de couverture utilisateur (6) respectivement dans une deuxième bande de réception Rx satellite (122 ; 142) et une deuxième bande d'émission Tx satellite (126 ; 146), en générant de multiples spots utilisateurs de réception satellite (23, 25, 27, 29, 31, 33, 35, 37, 39, 41, 43) et de multiples spots utilisateurs d'émission satellite (22, 24, 26, 28, 30, 32, 34, 36, 38, 40, 42 ) ;
un coeur numérique (210 ; 410), basé sur un processeur de traitement numérique transparent DTP (212 ; 412) comprenant un nombre d'accès en entrée et en sortie lui permettant d'être connecté à tous les spots des stations d'accès et tous les spots utilisateurs, et configuré pour interconnecter les spots utilisateurs et les spots des stations d'accès en fonction d'un plan de fréquence ;
la charge utile étant **caractérisée en ce qu'**elle comporte
un ensemble de commutation RF (214 ;414), formé par une ou plusieurs matrices de commutateurs RF (216, 218 :416, 418) d'accès source de spots utilisateurs en émission satellite Tx seulement, regroupés en groupement(s) Gj de spots utilisateurs en émission satellite Tx, ou formé par une ou plusieurs matrices (216 ; 416) de commutateurs RF d'accès source de spots utilisateurs émission satellite Tx, regroupés en groupement(s) Gj de spots utilisateurs en émission satellite Tx, et par une ou plusieurs matrices (218; 418) de commutateurs RF d'accès source de spots utilisateurs réception satellite Rx, regroupés en groupement(s) G'j de spots utilisateurs en réception satellite Rx, le nombre de spots Rj de chaque groupement Gj de spots utilisateurs en émission satellite Tx et le nombre R'j de chaque groupement G'j de spots utilisateurs en réception satellite Tx étant inférieurs ou égaux au nombre total P, supérieur ou égal à 2,de stations d'accès GW.

2. Charge utile de télécommunications multifaisceaux selon la revendication 1, dans laquelle

lorsque la charge utile est de type VHTS, la première bande de réception Rx (104) comprend une partie de la bande V, comprise entre 47,7 GHz et 51,4 GHz, formée par une première sous-bande (106) et/ou une deuxième sous-bande (108) mutuellement séparées ou adjacentes, et/ou une partie de la bande Ka, comprise entre 27,5 GHz et 30 GHz, formant une troisième sous-bande (110),
et la première bande d'émission Tx (112) comprend une quatrième sous-bande (114), partie de la bande Q, comprise entre 37,5 GHz et 42,5 GHz, et
la deuxième bande de réception Rx (122) comprend une cinquième sous-bande (124), partie de la bande Ka comprise entre 27,5 GHz et 30 GHz, et séparée de ou adjacente à la troisième sous-bande (110), et
la deuxième bande d'émission Tx (126) comprend une sixième sous-bande (128), partie de la bande Ka, comprise entre 17,3 GHz et 20,2 GHz ; ou
lorsque la charge utile est de type HTS,
la première bande de réception Rx (134) comprend une première sous-bande (136), partie de la bande Ka, comprise entre 27,5 GHz et 29,5 GHz, et la première bande d'émission Tx (138) comprend une deuxième sous-bande (140), partie de la bande Ka, comprise entre 17,3 GHz et 17,7 GHz ; et
la deuxième bande de réception Rx (142) comprend une troisième sous-bande (144), partie de la bande Ka, comprise entre 29,5 GHz et 30 GHz, et la deuxième bande d'émission Tx (146) comprend une quatrième sous-bande (148), partie de la bande Ka, comprise entre 17,7 GHz et 20,2 GHz.

3. Charge utile de télécommunications multifaisceaux selon l'une quelconque des revendications 1 à 2,

dans laquelle le premier système antennaire multifaisceaux (104; 404) comprend un nombre d'accès (222, 224 ; 422, 424) aux spots réception des stations d'accès GW, égal au nombre total P des stations d'accès GW, et est configuré pour que chaque spot réception de station d'accès GW créé desserve une unique station d'accès GW, et
la charge utile de télécommunications multifaisceaux comprenant en outre P premiers amplificateurs à faible bruit LNA (232, 234 ; 432, 434), chaque LNA (232, 234 : 432, 434) étant connecté entre l'unique accès (222, 224 ; 422, 424) d'un spot réception satellite Rx d'une station d'accès différente et une entrée différente du processeur numérique transparent DTP.

4. Charge utile de télécommunications multifaisceaux selon l'une quelconque des revendications 1 à 3,

dans laquelle le premier système antennaire multifaisceaux (204) comprend un nombre d'accès (242 ; 442) aux spots émission des stations d'accès GW égal au nombre total P des stations d'accès GW et est configuré pour que chaque spot émission de station d'accès desserve une unique station d'accès GW, et
comprenant un nombre P de deuxième amplificateurs de puissance HPA (242 ; 452) connectés entre les P accès émission des stations d'accès GWs et des sorties du processeur numérique transparent DTP.

5. Charge utile de télécommunications multifaisceaux selon l'une quelconque des revendications 1 à 4,

dans laquelle le deuxième système antennaire multifaisceaux (206 ; 406) comprend un nombre entier N d'accès source (262, 264, 266 ; 462, 464, 466) aux spots utilisateurs d'émission satellite, et
comprenant :

un nombre K1 de troisièmes amplificateurs RF de puissance HPA(276, 476) connecté(s)directement à K1 accès source (266 ; 466) aux spots utilisateurs d'émission satellite pris parmi les N accès de spot utilisateur d'émission, K1 étant un nombre entier inférieur ou égal à N-1, et
un nombre K2 de troisièmes amplificateurs RF de puissance HPA (278 ; 478) connecté(s) aux N-K1 accès sources restants de spot utilisateur d'émission au travers de K2 matrices de commutations Mj, (216; 416) permettant chacune la mise en oeuvre d'un saut de faisceaux sur un groupement Gj différent de spots utilisateurs Tx dont le nombre de spots Rj est inférieur ou égal au nombre total P de stations d'accès GW,
les nombres entiers N, K1, K2 et Rj, j variant de 1 à K2 vérifiant la relation :

$$N = K1 + \sum_{j=1}^{K2} R_j$$

6. Charge utile de télécommunications multifaisceaux selon la revendication 5,

dans laquelle le deuxième système antennaire multifaisceaux (206 ; 406) comprend un nombre entier d'accès source (282, 284, 286 ; 482, 484, 486) aux spots utilisateurs de réception émission satellite égal au nombre N, et
comprenant :

un nombre K'1 de quatrième amplificateurs RF à faible bruit LNA (296 ; 496) connectés directement à K'1 accès source (286 ; 486) aux spots utilisateurs de réception satellite pris parmi les N accès de spot utilisateur de réception, et
un nombre K'2 de quatrième amplificateurs RF à faible bruit LNA (298 ; 498)connectés aux N-K'1 accès sources restants de spot utilisateur de réception au travers de K'2 matrices de commutations Nj (218; 418), permettant chacune la mise en oeuvre d'un saut de faisceaux sur un groupement G'j différent de spots utilisateurs de réception Rx dont le nombre de spots R'j est inférieur ou égal au nombre total P de stations d'accès GW, les nombres entiers N, K'1, K'2 et R'j, j variant de 1 à K'2 vérifiant la relation :

$$N = K'1 + \sum_{j=1}^{K'2} R'_j$$

7. Charge utile de télécommunications multifaisceaux selon l'une quelconque des revendications 1 à 6, comprenant en outre
des chaines de conversion (302, 304, 306, 308, 310, 320, 322, 324 ;502, 504, 506, 508, 520,522, 524), connectées autour du processeur numérique transparent DTP (212 ; 412), et configurées pour interfacer les composants RF de la charge utile fonctionnant dans les première et deuxième bandes d'émission Tx et de réception Rx et des entrées et sorties du processeur numérique transparent fonctionnant à une fréquence intermédiaire utile compatible des largeurs de bande utile gérées par accès en réception et en émission du processeur.

8. Charge utile de télécommunications multifaisceaux selon l'une quelconque des revendications 1 à 7, dans lequel

le processeur numérique transparent DTP (212 ; 412) est configuré pour créer des chemins de fréquence **caractérisés par**
une connectivité entre les spots d'accès GW et les spots utilisateurs en voie directe et entre les spots utilisateurs et les spots d'accès en voie retour, et
un plan de fréquences prenant en compte un besoin de trafic et des contraintes de coordination des fréquences.

9. Charge utile de télécommunications multifaisceaux selon l'une quelconque des revendications 5 et 6, dans lequel
Chaque matrice Mj (216 ; 416), Nj (218 ; 418), de commutateurs RF sur des accès sources de spots utilisateurs en émission satellite Tx seulement ou en émission satellite Tx et en réception satellite Rx, partie de l'ensemble de commutation RF, est configurée pour distribuer temporellement, en émission satellite Tx le signal amplifié par l'amplificateur de puissance directement connecté en amont de la matrice Mj sur les spots utilisateurs suivant un plan d'allocation temporel émission Tx de tranches temporelles d'émission prédéterminé, et en réception satellite Rx les signaux des spots utilisateurs connectés à une même matrice Nj sur l'amplificateur faible bruit directement connecté en aval de ladite matrice Nj suivant un plan d'allocation temporel réception Rx de tranches temporelles de réception prédéterminé.

10. Charge utile de télécommunications multifaisceaux selon l'une quelconque des revendications 1 à 9, comprenant en outre un calculateur ou plusieurs calculateurs (332 ; 532) pour configurer de manière statique ou dynamique

le processeur de traitement numérique DTP (212 ; 412) en termes d'une matrice de connectivité depuis les spots d'accès GW vers les spots utilisateurs en voie directe et depuis les spots utilisateurs vers les spots d'accès en voie retour et en termes d'un plan de fréquences, et
la ou les matrices de commutateurs (214 ; 414) pour la mise en oeuvre de sauts de faisceaux en termes d'un plan d'allocation temporel émission Tx, ou en termes d'un plan d'allocation temporel émission Tx et d'un plan d'allocation temporel réception Rx,
la matrice de connectivité, le plan de fréquence et le(s) plan(s) d'allocation temporel dépendant de la distribution spatiale et temporelle de la demande de trafic dans l'ensemble des spots utilisateurs et de contraintes de coordination des fréquences.

11. Charge utile de télécommunications multifaisceaux selon la revendications 10, comprenant en outre une mémoire de configurations (342 ; 532) du processeur de traitement numérique DTP (212 ; 412) et de la ou des matrices de commutateurs RF (214, 217 ; 416, 418), dans lesquelles des configurations différentes en termes de triplets formés chacun par une matrice de connectivité, un plan de fréquence, un plan d'allocation temporel émission Tx ou de quadruplets formés chacun par une matrice de connectivité, un plan de fréquence, un plan d'allocation temporel émission Tx et un plan d'allocation temporel réception Tx,
les configurations étant activables à des instants différents formant une séquence d'activation des configurations.

12. Charge utile de télécommunications multifaisceaux selon l'une quelconque des revendications 1 à 11, dans laquelle
le processeur de traitement numérique transparent DTP (212 ; 412) est configuré pour fournir une flexibilité totale en terme d'allocation de bande passante aux spots utilisateurs en fonction des besoins de trafic sans sur dimensionner le nombre de stations d'accès GW.

13. Charge utile de télécommunications multifaisceaux selon l'une quelconque des revendications 5, 6 et 9, dans laquelle

chaque matrice Mj (216 ; 416) de commutateurs RF émission, connecté à un unique amplificateur de puissance HPA (278 ; 478) et associée à un groupe Gj de spots utilisateurs émission, est configurée pour connecter à tour de rôle un spot utilisateur émission du groupe Gj à l'amplificateur de puissance HPA et lui permettre de recevoir toute la bande amplifiée par ledit HPA, et
le processeur de traitement numérique transparent DTP (212 ; 412) est configuré pour charger chaque amplificateur HPA, connecté à une matrice Mj de commutateurs RF émission, avec les bandes de fréquence effectivement disponibles du fait de contraintes possibles de coordination pour l'ensemble Gj des spots utilisateurs émission connectés au même HPA.

14. Charge utile de télécommunications multifaisceaux selon l'une quelconque des revendications 5, 6, 9 et 13, dans laquelle

le processeur de traitement numérique transparent DTP (212 ; 412) est configuré pour charger chaque amplificateur HPA (278 ; 478), connecté à une matrice Mj (216 ; 416) de commutateurs RF émission, avec la quantité de bande de fréquence requise pour répondre aux variations temporelles de trafic demandées aux spots utilisateurs émission du groupe Gj connectés à l'amplificateur de puissance HPA (278 ; 478) correspondant,
les matrices Mj de commutateurs RF émission (216 ; 416) sont configurés en saut de faisceaux avec une modulation possible du partage temporel du temps entre les spots d'un même groupe Gj connectés à un même HPA de sorte à venir compléter l'aptitude du DTP à allouer plus ou moins de bande et répondre aux variations de trafic plus rapides auxquelles le DTP ne peut pas répondre.

15. Charge utile de télécommunications multifaisceaux selon l'une quelconque des revendications 1 à 14, dans laquelle
le processeur de traitement numérique transparent DTP (212 ; 412) et les matrices de commutateurs à saut de faisceaux (214; 414) sont configurés pour connecter plusieurs spots d'accès de stations d'accès Rx à un même spot utilisateur Tx tout en assurant une gestion indépendante des gains de canaux issus de chaque station d'accès GW connectées audit même spot utilisateur émission.

**Patentansprüche**

1. Mehrstrahl-Telekommunikationsnutzlast für Anwendungen in der weltraumgestützten Kommunikation mit sehr hohen Datenraten (VHTS) oder der weltraumgestützten Kommunikation mit hohen Datenraten (HTS), die Folgendes umfasst:

ein erstes Mehrstrahl-Antennensystem (204; 404) aus passiven Antennen mit einer Rx-Empfangskomponente ($204_1$; $404_1$) und einer Tx-Sendekomponente ($204_2$; $404_2$), jeweils konfiguriert zum Empfangen von Rx-Empfangssatelliten-Gateways GW und Senden zu Tx-Sendesatelliten-Gateways GW in einem ersten Rx-Satellitenempfangsband (104; 134) und einem ersten Tx-Satellitensendeband (112; 138), und ein zweites Mehrstrahl-Antennensystem (206; 406) aus passiven Antennen mit einer Rx-Empfangskomponente ($206_1$; $406_1$) und einer Tx-Sendekomponente ($206_2$; $406_2$), jeweils konfiguriert zum Empfangen von und Senden zu einer Nutzerversorgungszone (6) in einem zweiten Rx-Satellitenempfangsband (122; 402) bzw. einem zweiten Tx-Satellitensendeband (126; 146), wobei mehrere Satellitenempfangsnutzerstellen (23, 25, 27, 29, 31, 33, 35, 37, 39, 41, 43) und mehrere Satellitensendenutzerstellen (22, 24, 26, 28, 30, 32, 34, 36, 38, 40, 42) erzeugt werden;
einen digitalen Kern (210; 410) auf der Basis eines transparenten digitalen Verarbeitungsprozessors DTP (212; 412), der eine Anzahl von Ein- und Ausgangsports aufweist, so dass er mit allen Gateway-Stellen und allen Nutzerstellen verbunden werden kann, und der zum Verbinden der Nutzerstellen und der Gateway-Stellen in Abhängigkeit von einem Frequenzplan miteinander konfiguriert ist;
wobei die Nutzlast **dadurch gekennzeichnet ist, dass** sie Folgendes umfasst:
eine RF-Schalteinheit (214; 414), gebildet aus einem oder mehreren RF-Quellport-Schalterarrays (216, 218: 416, 418) nur von Tx-Satellitensendenutzerstellen, gruppiert zu Gruppen Gj von Tx-Satellitensendenutzerstellen, oder durch eine oder mehrere RF-Quellport-Schalterarrays (216; 416) von Tx-Satellitensendenutzerstellen, gruppiert zu Gruppen Gj von Tx-Satellitensendenutzerstellen, und durch ein oder mehrere RF-Quellport-Schalterarrays (218; 416) von Tx-Satellitensendenutzerstellen, gruppiert zu Gruppen Gj von Tx-Satellitensendenutzerstellen, wobei die Anzahl von Stellen Rj jeder Gruppe Gj von Tx-Satellitensendenutzerstellen und die Anzahl R'j jeder Gruppe G'j von Tx-Satellitenempfangsnutzerstellen genauso groß wie oder kleiner als die Gesamtzahl P, gleich oder größer 2, von Gateways GW sind.

2. Mehrstrahl-Telekommunikationsnutzlast nach Anspruch 1, wobei
wenn die Nutzlast vom Typ VHTS ist,

das erste Rx-Empfangsband (104) einen Teil des V-Bands zwischen 47,7 GHz und 51,4 GHz, gebildet durch ein erstes Subband (106) und/oder ein zweites Subband (108), die voneinander getrennt oder benachbart sind, und/oder einen Teil des Ka-Bands zwischen 27,5 GHz und 30 GHz umfasst, das ein drittes Subband (110) bildet,
und das erste Tx-Sendeband (112) ein viertes Subband (114), Teil des Q-Bands, zwischen 37,5 GHz und 42,5 GHz umfasst, und
das zweite Empfangsband Rx (122) ein fünftes Subband (124), Teil des Ka-Bands zwischen 27,5 GHz und 30 GHz umfasst, getrennt von oder benachbart zu dem dritten Subband (110), und
das zweite Tx-Sendeband (126) ein sechstes Subband (128), Teil des Ka-Bands, zwischen 17,3 GHz und 20,2 GHz umfasst; oder
wenn die Nutzlast vom Typ HTS ist,
das erste Rx-Empfangsband (134) ein erstes Subband (136), Teil des Ka-Bands, zwischen 27,5 GHz und 29,5 GHz umfasst und das erste Tx-Sendeband (138) ein zweites Subband (140), Teil des Ka-Bands, zwischen 17,3 GHz und 17,7 GHz umfasst; und
das zweite Rx-Empfangsband (142) ein drittes Subband (144), Teil des Ka-Bands, zwischen 29,5 GHz und 30 GHz umfasst, und das zweite Tx-Sendeband (146) ein viertes Subband (148), Teil des Ka-Bands, zwischen 17,7 GHz und 20,2 GHz umfasst.

3. Mehrstrahl-Telekommunikationsnutzlast nach einem der Ansprüche 1 bis 2,

wobei das erste Mehrstrahl-Antennensystem (104; 404) eine Anzahl von Ports (222, 224; 422, 424) zu den Empfangsstellen der Gateways GW umfasst, die gleich der Gesamtzahl P von Gateways GW ist, und so konfiguriert ist, dass jede erzeugte Gateway-(GW)-Empfangsstelle ein einziges Gateway GW versorgt, und
die Mehrstrahl-Telekommunikationsnutzlast ferner P erste rauscharme Verstärker LNA (232, 234; 432, 434) umfasst, wobei jeder LNA (232, 234; 432, 434) zwischen dem einzelnen Port (222, 224; 422, 424) einer Rx-Satellitenempfangsstelle eines anderen Gateway und einem anderen Eingang des transparenten digitalen Prozessors DTP geschaltet ist.

**4.** Mehrstrahl-Telekommunikationsnutzlast nach einem der Ansprüche 1 bis 3,

wobei das erste Mehrstrahl-Antennensystem (204) eine Anzahl von Ports (242; 442) zu den Sendestellen der Gateways GW umfasst, die gleich der Gesamtzahl P der Gateways GW ist, und so konfiguriert ist, dass jede Gateway-Sendestelle ein einzelnes Gateway GW bedient, und

mit einer Anzahl P von zweiten Leistungsverstärkern HPA (242; 452), die zwischen die P Sendeports der Gateways GWs und die Ausgänge des transparenten digitalen Prozessors DTP geschaltet sind.

**5.** Mehrstrahl-Telekommunikationsnutzlast nach einem der Ansprüche 1 bis 4,
wobei das zweite Mehrstrahl-Antennensystem (206; 406) eine ganzzahlige Anzahl N von Quellports (262, 264, 266; 462, 464, 466) zu den Satellitensendenutzerstellen umfasst und Folgendes umfasst:

eine Anzahl K1 von dritten RF-Leistungsverstärkern HPA (276, 476), die mit K1 Quellports (266; 466) zu den Satellitensendenutzerstellen direkt verbunden sind, ausgewählt aus den N Sendenutzerstellenports, wobei K1 eine ganze Zahl genauso groß wie oder kleiner als N-1 ist, und
eine Anzahl K2 von dritten RF-Leistungsverstärkern HPA (278; 478), die mit den verbleibenden N-K1 Sendebenutzerstellen-Quellports über K2 Schaltmatrizen Mj (216; 416) verbunden sind, die jeweils die Implementierung eines Strahlsprungs zu einer anderen Gruppe Gj von Tx-Nutzerstellen ermöglichen, deren Anzahl von Stellen Rj genauso groß wie oder kleiner als die Gesamtzahl P von Gateways GW ist,
wobei die ganzen Zahlen N, K1, K2 und Rj, wobei j von 1 bis K2 variiert, die folgende Beziehung erfüllen:

$$N = K1 + \sum_{j=1}^{K2} R_j \, .$$

**6.** Mehrstrahl-Telekommunikationsnutzlast nach Anspruch 5,
wobei das zweite Mehrstrahl-Antennensystem (206; 406) eine ganzzahlige Anzahl von Quellports (282, 284, 286; 482, 484, 486) zu den Satellitensende-/-empfangsstellen gleich der Zahl N umfasst, und die Folgendes umfasst:

eine Anzahl K'1 von vierten rauscharmen RF-Verstärkern LNA (296; 496), die mit K'1 Quellports (286; 486) zu den Satellitenempfangsnutzerstellen direkt verbunden sind, ausgewählt aus den N Empfangsnutzerstellenports, und
eine Anzahl K'2 von vierten rauscharmen RF-Verstärkern LNA (298; 498), die über K'2 Schaltmatrizen Nj (218; 418) mit den verbleibenden N-K'1 Quellports von Empfangsnutzerstellen verbunden sind, die jeweils einen Strahlsprung zu einer anderen Gruppe G'j von Rx-Empfangsnutzerstellen ermöglichen, deren Anzahl von Stellen R'j genauso groß wie oder kleiner als die Gesamtzahl P von Gateways GW ist, wobei die ganzen Zahlen N, K'1, K'2 und R'j, wobei j von 1 bis K'2 variiert, die folgende Beziehung erfüllen:

$$N = K'1 + \sum_{j=1}^{K'2} R'_j \, .$$

**7.** Mehrstrahl-Telekommunikationsnutzlast nach einem der Ansprüche 1 bis 6, die ferner Folgendes umfasst:
Konversionsketten (302, 304, 306, 308, 310, 320, 322, 324; 502, 504, 506, 508, 520, 522, 524), die um den transparenten digitalen DTP-Prozessor (212, 412) herum geschaltet und zum Bilden einer Schnittstelle mit den im ersten und zweiten Tx-Sendeband und Rx-Empfangsband arbeitenden RF-Komponenten der Nutzlast und den Ein- und Ausgängen des mit einer nützlichen Zwischenfrequenz arbeitenden transparenten digitalen Prozessors, die mit den durch den Empfangs- und Sendezugriff des Prozessors verwalteten Nutzbandbreiten kompatibel ist, konfiguriert sind.

**8.** Mehrstrahl-Telekommunikationsnutzlast nach einem der Ansprüche 1 bis 7, wobei

der transparente digitale Prozessor DTP (212; 412) zum Erzeugen von Frequenzpfaden konfiguriert ist, **gekennzeichnet durch**
eine Konnektivität zwischen den Gateways GW und den Vorwärtskanal-Nutzerstellen sowie zwischen den Nutzerstellen und den Rückwärtskanal-Gateways, und
einen Frequenzplan, der einen Verkehrsbedarf und Frequenzkoordinationsbeschränkungen berücksichtigt.

**9.** Mehrstrahl-Telekommunikationsnutzlast nach einem der Ansprüche 5 und 6, wobei
jede Matrix Mj (216; 416), Nj (218; 418) von RF-Schaltern auf Quellports von nur Tx-Satellitensendenutzerstellen oder von Tx-Satellitensende- und Rx-Satellitenempfangsnutzerstellen, Teil des RF-Schaltarray, konfiguriert ist zum zeitlichen Verteilen, bei Tx-Satellitensendung, des von dem der Matrix Mj direkt vorgeschalteten Leistungsverstärker verstärkten Signals auf die Nutzerstellen gemäß einem Tx-Sendezeitzuweisungsplan von vorbestimmten Sendezeitschlitzen, und bei Rx-Satellitenempfang, der Signale der Nutzerstellen, die mit derselben Matrix Nj auf dem rauscharmen Verstärker verbunden sind, der der Matrix Nj gemäß einem vorbestimmten Rx-Empfangszeitschlitzzuweisungsplan direkt nachgeschaltet ist.

10. Mehrstrahl-Telekommunikationsnutzlast nach einem der Ansprüche 1 bis 9, der ferner einen oder mehrere Rechner (332; 532) umfasst zum statischen oder dynamischen Konfigurieren

des digitalen Verarbeitungsprozessors DTP (212; 412) in Bezug auf eine Konnektivitätsmatrix von den Gateways GW zu den Vorwärts-Nutzerstellen und von den Nutzerstellen zu den Rückwärts-Gateways und in Bezug auf einen Frequenzplan, und
des einen oder der mehreren Arrays von Schaltern (214; 414) zum Implementieren von Strahlsprüngen in Bezug auf einen Tx-Sendezeitzuweisungsplan oder in Bezug auf einen Tx-Empfangszeitzuweisungsplan und einen Rx-Empfangszeitzuweisungsplan,
wobei die Konnektivitätsmatrix, der Frequenzplan und der eine oder die mehreren Zeitzuweisungspläne von der räumlichen und zeitlichen Verteilung des Verkehrsbedarfs in allen Nutzerstellen und von Frequenzkoordinationsbeschränkungen abhängen.

11. Mehrstrahl-Telekommunikationsnutzlast nach Anspruch 10, die ferner einen Konfigurationsspeicher (342; 532) des digitalen Verarbeitungsprozessors DTP (212; 412) und des einen oder der mehreren RF-Schalterarrays (214, 217; 416, 418) umfasst, bei denen unterschiedliche Konfigurationen in Bezug auf Tripletts, jeweils gebildet durch eine Konnektivitätsmatrix, einen Frequenzplan, einen Tx-Sendezeitzuweisungsplan, oder von Quadrupletts, jeweils gebildet durch eine Konnektivitätsmatrix, einen Frequenzplan, einen Tx-Sendezeitzuweisungsplan und einen Tx-Empfangszeitzuweisungsplan, vorliegen, wobei die Konfigurationen zu unterschiedlichen Zeitpunkten aktivierbar sind, die eine Aktivierungssequenz der Konfigurationen bilden.

12. Mehrstrahl-Telekommunikationsnutzlast nach einem der Ansprüche 1 bis 11, wobei der transparente digitale Verarbeitungsprozessor DTP (212; 412) zum Erzielen totaler Flexibilität bei der Zuweisung von Bandbreite zu den Nutzerstellen in Abhängigkeit vom Verkehrsbedarf konfiguriert ist, ohne die Anzahl von Gateways GW zu überdimensionieren.

13. Mehrstrahl-Telekommunikationsnutzlast nach einem der Ansprüche 5, 6 und 9, wobei

jede Matrix Mj (216; 416) von RF-Sendeschaltern, die mit einem einzelnen Leistungsverstärker HPA (278; 478) verbunden und mit einer Gruppe Gj von Sendenutzerstellen assoziiert sind, zum abwechselnden Verbinden einer Sendenutzerstelle der Gruppe Gj mit dem Leistungsverstärker HPA und zum Zulassen konfiguriert ist, dass er das gesamte durch den HPA verstärkte Band empfängt, und
der transparente digitale Verarbeitungsprozessor DTP (212; 412) zum Laden der Frequenzbänder auf jeden mit einer Matrix Mj von RF-Sendeschaltern verbundenen Verstärker HPA konfiguriert ist, die aufgrund möglicher Koordinationsbeschränkungen für die Gruppe Gj von mit demselben HPA verbundenen Sendenutzerstellen tatsächlich verfügbar sind.

14. Mehrstrahl-Telekommunikationsnutzlast nach einem der Ansprüche 5, 6, 9 und 13, wobei

der transparente digitale Verarbeitungsprozessor DTP (212; 412) zum Laden der Frequenzbandquantität auf jeden mit einer Matrix Mj (216; 416) von RF-Sendeschaltern verbundenen Verstärker HPA (278; 478) konfiguriert ist, die erforderlich ist, um den zeitlichen Verkehrsschwankungen gerecht zu werden, die von den mit dem entsprechenden Leistungsverstärker HPA (278; 478) verbundenen Sendenutzerstellen der Gruppe Gj verlangt werden,
die Mj-Matrizen von RF-Sendeschaltern (216; 416) als Strahlsprung mit einer möglichen Modulation der zeitlichen Aufteilung der Zeit zwischen den Stellen einer mit einem gleichen HPA verbundenen gleichen Gruppe Gj konfiguriert sind, um die Fähigkeit des DTP zu ergänzen, mehr oder weniger Band zuzuweisen und schneller auf Verkehrsschwankungen zu reagieren, auf die der DTP nicht reagieren kann.

15. Mehrstrahl-Telekommunikationsnutzlast nach einem der Ansprüche 1 bis 14, wobei der transparente digitale DTP-Prozessor (212; 412) und die Arrays von Strahlsprungschaltern (214; 414) so konfiguriert sind, dass sie mehrere Rx-Gateway-Zugangsstellen mit derselben Nutzerstelle Tx verbinden und dabei eine unabhängige Verwaltung der Kanalgewinne von jedem mit derselben Nutzerstelle verbundenen Gateway GW gewährleisten.

## Claims

1. Multibeam telecommunications payload for very high throughput satellite telecommunications (VHTS) or high throughput satellite telecommunications (HTS) comprising:

   a first multibeam antenna system (204; 404) of passive antennas with a receive component Rx (204$_1$; 404$_1$) and a transmit component Tx (204$_2$;404$_2$), which are respectively configured to receive from satellite Rx receive access station GW spots, and to transmit to satellite Tx transmit access station GW spots respectively in a first satellite Rx receive band (104; 134) and a first satellite Tx transmit band (112; 138) and a second multibeam antenna system (206; 406) of passive antennas with a receive component Rx (206$_1$; 406$_1$) and a transmit component Tx (206$_2$; 406$_2$), which are respectively configured to receive from and transmit to a user coverage zone (6) respectively in a second satellite Rx receive band (122; 142) and a second satellite Tx transmit band (126; 146), by generating multiple satellite receive user spots (23, 25, 27, 29, 31, 33, 35, 37, 39, 41, 43) and multiple satellite transmit user spots (22, 24, 26, 28, 30, 32, 34, 36, 38, 40, 42);
   a digital core (210; 410), based on a digital processing transparent processor DTP (212; 412), comprising a number of accesses at input and at output allowing for its connection to all the spots of the access stations and all the user spots, and configured to interconnect the user spots and the spots of the access stations in accordance with a frequency plan;
   the payload being **characterised in that** it has: an RF switching set (214; 414), made up of one or more matrices of RF switches (216, 218: 416, 418) for source access of user spots in Tx satellite transmit only, clustered in cluster(s) Gj of user spots in Tx satellite transmit, or made up of one or more matrices (216; 416) of RF switches for source access of user spots in Tx satellite transmit, clustered in cluster(s) Gj of user spots in Tx satellite transmit, and of one or more matrices (218; 418) of RF switches for source access of user spots in Rx satellite receive, clustered in cluster(s) G'j of user spots in Rx satellite receive, the number of spots Rj in each cluster Gj of user spots in Tx satellite transmit and the number R'j of each cluster G'j of user spots in Tx satellite receive being less than or equal to the total number P, higher than or equal to 2, of access stations GW.

2. Multibeam telecommunications payload according to claim 1, wherein

   when the payload is of VHTS type, the first Rx receive band (104) comprises a part of the V band, lying between 47,7 GHz and 51,4 GHz, formed by a first sub-band (106) and/or a second sub-band (108) which are mutually separated or adjacent, and/or a part of the Ka band, lying between 27,5 GHz and 30 GHz, forming a third sub-band (110),

   and the first Tx transmit band (112) comprises a fourth sub-band (114), part of the Q-band, lying between 37,5 GHz and 42,5 GHz, and
   the second Rx receive band (122) comprises a fifth sub-band (124), part of the Ka band lying between 27,5 GHz and 30 GHz, and separated from or adjacent to the third sub-band (110), and
   the second Tx transmit band (126) comprises a sixth sub-band (128), part of the Ka band, lying between 17,3 GHz and 20,2 GHz; or
   when the payload is of HTS type,
   the first Rx receive band (134) comprises a first sub-band (136), part of the Ka band, lying between 27,5 GHz and 29,5 GHz, and the first Tx transmit band (138) comprises a second sub-band (140), part of the Ka band, lying between 17,3 GHz and 17,7 GHz; and
   the second Rx receive band (142) comprises a third sub-band (144), part of the Ka band, lying between 29,5 GHz and 30 GHz, and the second Tx transmit band (146) comprises a fourth sub-band (148), part of the Ka band, lying between 17,7 GHz and 20,2 GHz.

3. Multibeam telecommunications payload according to any one of claims 1 to 2,

   wherein the first multibeam antenna system (104; 404) comprises a number of accesses (222, 224; 422, 424) to the receive spots of the access stations GW equal to the total number P of the access stations GW, and is configured so that each created receive spot of the access stations GW services a single access station GW, and
   the multibeam telecommunications payload further comprises P first low noise amplifiers LNA (232, 234; 432, 434), each LNA (232, 234: 432, 434) being connected between the single access (222, 224; 422, 424) of a Rx satellite receive spot of a different access station and a different input of the digital transparent processor DTP.

4. Multibeam telecommunications payload according to any one of claims 1 to 3,

wherein the first multibeam antenna system (204) comprises a number of accesses (242; 442) to the transmit spots of the access stations GW equal to the total number P of access stations GW and is configured so that each access station transmit spot services a single access station GW, and
comprising a number P of second power amplifiers HPA (242; 452) connected between the P transmit accesses of the access stations GWs and outputs of the digital transparent processor DTP.

5. Multibeam telecommunications payload according to any one of claims 1 to 4,
wherein the second multibeam antenna system (206; 406) comprises an integer number N of source accesses (262, 264, 266; 462, 464, 466) to the satellite transmit user spots, and comprising:

a number K1 of third RF power amplifiers HPA (276, 476) connected directly at K1 source accesses (266; 466) to the satellite transmit user spots taken from among the N transmit user spot accesses, K1 being an integer less than or equal to N-1, and
a number K2 of third RF power amplifiers HPA (278; 478) connected to the N-K1 remaining transmit user spot source accesses through K2 switching matrices Mj, (216; 416) each allowing the implementation of beam hops on a different cluster Gj of Tx user spots for which the number of spots Rj is less than or equal to the total number P of access stations GW,
the integers N, K1, K2 and Rj, with j varying from 1 to K2, satisfying the relation:

$$N = K1 + \sum_{j=1}^{K2} R_j$$

6. Multibeam telecommunications payload according to claim 5,

wherein the second multibeam antenna system (206; 406) comprises an integer number of source accesses (282, 284, 286; 482, 484, 486) to the satellite receive-transmit user spots which is equal to the number N, and comprising:

a number K'1 of fourth low noise RF amplifiers LNA (296; 496) connected directly to K'1 source accesses (286; 486) to the satellite receive user spots taken from among the N receive user spot accesses, and
a number K'2 of fourth low noise RF amplifiers LNA (298; 498) connected to the N-K'1 remaining receive user spot source accesses through K'2 switching matrices Nj (218; 418), each allowing the implementation of beam hops on a different cluster G'j of Rx receive user spots for which the number of spots R'j is less than or equal to the total number P of access stations GW, the integers N, K'1, K'2 and R'j, with j varying from 1 to K'2, satisfying the relation:

$$N = K'1 + \sum_{j=1}^{K'2} R'_j$$

7. Multibeam telecommunications payload according to any one of claims 1 to 6, further comprising conversion chains (302, 304, 306, 308, 310, 320, 322, 324; 502, 504, 506, 508, 520, 522, 524), connected around the digital transparent processor DTP (212; 412), and configured to interface the RF components of the payload operating in the first and second Tx transmit and Rx receive bands and inputs and outputs of the transparent digital processor operating at a useful intermediate frequency compatible with the useful-band widths managed by access in reception and in transmission of the processor.

8. Multibeam telecommunications payload according to any one of claims 1 to 7, wherein

the digital transparent processor DTP (212; 412) is configured to create frequency paths **characterised by**
a connectivity between the access spots GW and the user spots for the forward pathway and between the user spots and the access spots in return pathway, and
a frequency plan taking into account a traffic need and frequency coordination constraints.

9. Multibeam telecommunications payload according to any one of claims 5 and 6, wherein
each matrix Mj (216; 416), Nj (218; 418), of RF switches on source accesses of user spots in Tx satellite transmit only or in Tx satellite transmit and in Rx satellite receive, part of the RF switching set, is configured to distribute temporally, in Tx satellite transmit the signal amplified by the power amplifier directly connected upstream of the matrix Mj on the user spots according to a predetermined Tx transmit temporal allocation plan for transmit time slots, and in Rx satellite receive the signals of the user spots connected to one and the same matrix Nj on the low noise amplifier directly connected downstream of said matrix Nj according to a predetermined Rx receive temporal allocation plan for receive time slots.

10. Multibeam telecommunications payload according to any one of claims 1 to 9, further comprising a calculator or several calculators (332; 532) for configuring in a static or dynamic manner

the digital processing processor DTP (212; 412) in terms of a matrix of connectivity from the access spots GW to the user spots for the forward pathway and from the user spots to the access spots for the return pathway and in terms of a frequency plan, and
the matrix or matrices of switches (214; 414) for the implementation of beam hops in terms of a Tx transmit temporal allocation plan, or in terms of a Tx transmit temporal allocation plan and of a Rx receive temporal allocation plan,
the connectivity matrix, the frequency plan and the temporal allocation plan(s) depending on the spatial and temporal distribution of the traffic demand in the whole of the user spots and on frequency coordination constraints.

11. Multibeam telecommunications payload according to claim 10, further comprising a memory of configurations (342; 532) of the digital processing processor DTP (212; 412) and of the matrix or matrices of RF switches (214, 217; 416, 418), in which configurations, which are different in terms of triplets that are each made up of a connectivity matrix, a frequency plan, a Tx transmit temporal allocation plan or of quadruplets that are each made up of a connectivity matrix, a frequency plan, a Tx transmit temporal allocation plan and a Tx receive temporal allocation plan,
the configurations being able to be activated at different instants, forming a configuration activation sequence.

12. Multibeam telecommunications payload according to any one of claims 1 to 11, wherein
the digital processing transparent processor DTP (212; 412) is configured to provide total flexibility in terms of passband allocation to the user spots as a function of the traffic needs without overdimensioning the number of access stations GW.

13. Multibeam telecommunications payload according to any one of claims 5, 6 and 9, wherein

each matrix Mj (216; 416) of transmit RF switches, connected to a single power amplifier HPA (278; 478) and associated with a group Gj of transmit user spots, is configured to connect in turn a transmit user spot of the group Gj to the power amplifier HPA and allow it to receive the entire band amplified by the said HPA, and
the digital processing transparent processor DTP (212; 412) is configured to load each amplifier HPA, connected to a matrix Mj of transmit RF switches, with the frequency bands actually available on account of possible coordination constraints for the set Gj of transmit user spots connected to the same HPA.

14. Multibeam telecommunications payload according to any one of claims 5, 6, 9 and 13, wherein

the digital processing transparent processor DTP (212; 412) is configured to load each amplifier HPA (278; 478), connected to a matrix Mj (216; 416) of transmit RF switches, with the quantity of frequency band required to meet the temporal traffic variations demanded of the transmit user spots of the group Gj that are connected to the corresponding power amplifier HPA (278; 478),
the matrices Mj of transmit RF switches (216; 416) are configured for beam hopping with possible modulation of the temporal sharing of the time between the spots of one and the same group Gj that are connected to one and the same HPA so as to supplement the ability of the DTP to allocate more or less band and to meet the faster traffic variations which the DTP cannot meet.

15. Multibeam telecommunications payload according to any one of claims 1 to 14, wherein
the digital processing transparent processor DTP (212; 412) and the beam hopping switch matrices (214; 414) are configured to connect several Rx access station access spots to one and the same Tx user spot while ensuring independent management of the gains of channels arising from each access station GW connected to said same transmit user spot.

Spots accès GW   Section voie Directe        (Outbound)        Spots utilisateurs

Source accès GWi   LNA   Docon Rx/Tx   LCamp TWTA   DMUX   Uj

LCamp TWTA

Antenne accès GW

**FIG.1A**

Sources spots utilisateurs

1 à 4 antennes spots utilisateurs

Spots utilisateurs   Section voie retour                          Spots accès GW

Uj   CMUX   Docon Rx/Tx   LCamp TWTA   Source accès GWi

Uj

1 à 4 antennes spots utilisateurs   Sources spots utilisateurs   (Inbound)   Antenne accès GW

**FIG.1B**

EP 3 439 199 B1

Couverture utilisateur

GW régionale
(GW1)

GW mondiale
(GW2)

FIG.2

FIG.3

HTS

Rx satellite
{

Ka

Voie directe ⟵ 132

GWs hors couverture utilisateur ⟋ 150

⟶ Fréquence

27,5 GHz      134      30 GHz

136 ⟋ Voie directe   134 ↘   Voie retour ⟵ 142

Ka

GWs dans couverture utilisateur ⟋ 144

⟶ Fréquence

27,5 GHz      29,5 Ghz   30 GHz

146

░░ : spots utilisateur

148 ⟋ Voie directe   Voie retour   138 ↘

Tx satellite
{

Ka

GWs ⟋ 140

⟶ Fréquence

17,3 GHz   17,7 GHz      20,2 GHz

FIG.4

FIG.5

FIG.6

FIG.7

EP 3 439 199 B1

FIG.8

FIG.9

**EP 3 439 199 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6160994 A